# EUROPEAN PATENT APPLICATION

(11) **EP 4 459 596 A1**
(43) Date of publication of application: **06.11.2024**
(21) Application number: 22915436.4
(22) Date of filing: 08.09.2022
(51) Int. Cl.: G08G 5/00

(54) **INFORMATION PROCESSING DEVICE, INFORMATION PROCESSING METHOD, AND PROGRAM**

(30) Priority: 27.12.2021 WO PCT/JP2021/048558; 15.08.2022 WO PCT/JP2022/030889
(71) Applicant: Nabla Mobility Inc., Tokyo 1020072 (JP)
(72) Inventor: TANAKA Shinji, Tokyo 1020072 (JP); SATO Makoto, Tokyo 1020072 (JP); HIRAMOTO Kazuhiro, Tokyo 1020072 (JP); DUVIGNEAU, Louis Marie, Tokyo 1020072 (JP)
(74) Representative: Betten & Resch
(86) International application number: PCT/JP2022/033731
(87) International publication number: WO 2023/127201

(57) **Abstract**

[Problem]

There is a demand to enable the acquisition of information that is useful for flying aircraft.

[Solution]

The information processing device 100 comprising an own aircraft information acquisition unit 141 that acquires condition information regarding the condition of a target aircraft, a path acquisition unit 153 that acquires a path that the target aircraft may follow, a related information acquisition unit 151 that acquires related information regarding the path based on the condition information, and an output unit 161 that outputs output information based on the related information, is capable of outputting information useful for flying aircraft.

## Description

### [Technical Field]

The present invention relates to an information processing device, an information processing method, and a program that outputs information regarding the paths of on which aircraft fly.

### [Background Art]

In aircraft operations, the path an aircraft flies is determined based on restrictions such as those regarding other aircraft and regulations.

Regarding such aircraft flights Patent Document 1 describes flying with an altitude profile according to the performance envelope of the aircraft under statutory flight level constraints.

Patent Document 2 describes generating multiple flight paths in a local area near an airport that do not interfere with other aircraft, allowing pilots to select a flight path considering fuel efficiency, speed, and other operational considerations.

Patent Document 3 describes a system configuration for optimizing flight parameters and fuel consumption for flight stage segments.

Patent Documents 4 and 5 describe outputting weather forecasts using machine learning based on measurement data.

Non-Patent Document 1 describes aircraft trajectory prediction technology that considers interactions between aircraft using a long-short term memory neural network model.

### [Prior Art Documents]

### [Patent Documents]

[Patent Document 1] Japanese Unexamined Patent Publication No. 2013-173522
[Patent Document 2] U.S. Patent Application Publication No. 2017/0018196
[Patent Document 3] International Publication No. 2015/155202
[Patent Document 4] U.S. Patent Application Publication No. 2017/0299772
[Patent Document 5] International Publication No. 2019/244168

### [Non-Patent Documents]

[Non-Patent Document 1] Xu, Z.; Zeng, W.; Chu, X.; Cao, P. Multi-Aircraft Trajectory Collaborative Prediction Based on Social Long Short-Term Memory Network. Aerospace 2021, 8, 115. https://doi.org/10.3390/aerospace8040115

### [Summary of Invention]

### [Problem to Solve]

In the context of aircraft operation management, there is a need to obtain useful information for flying aircraft. For example, in pursuit of a sustainable society, it is desirable to obtain information that allows for more efficient aircraft flights. Moreover, for aircraft to achieve stable flight, obtaining useful information is also desirable.

The present invention aims to provide an information processing device, an information processing method, and a program that can output useful information for the flight of the target aircraft.

### [Means for Solve Problem]

The first invention is an information processing device comprising: an own aircraft information acquisition unit that acquires condition information regarding the condition of the target aircraft; a path acquisition unit that acquires the path the target aircraft may follow; a related information acquisition unit that acquires related information regarding the path based on the condition information; and an output unit that outputs output information based on the related information.

This configuration enables for outputting useful information for the flight of the aircraft.

The second invention, in accordance with the first invention, is an information processing device, wherein the path acquisition unit acquires the path the target aircraft may follow based on past paths.

This configuration enables for acquiring paths that are practical for flying based on past performance.

The third invention, in accordance with the first or second invention, is an information processing device, wherein the related information acquisition unit acquires related information based on information regarding airspace facility usage fees associated with the path.

This configuration enables for outputting information that accurately reflects the cost required for flying.

The fourth invention, in accordance with any of the first to third inventions, is an information processing device, wherein the related information acquisition unit acquires obtained information, comprising estimated results of the combustor outlet temperature of the target aircraft's engine, by applying input information based on the path to learning information corresponding to the characteristics of the target aircraft's body, and acquires related information comprising information regarding maintenance costs of the target aircraft using the obtained information and engine operation time when flying the path.

This configuration enables for outputting information based on related information that accurately reflects the cost required for flying.

The fifth invention, in accordance with any of the first to fourth inventions, is an information processing device, wherein the path acquisition unit acquires two or more paths that the target aircraft may follow, and the related information acquisition unit determines whether each path meets specified recommendation conditions based on the respective values of two or more specified factors obtained for each path and the designated information specifying one or more of the two or more factors, and acquires related information indicating the recommended path for the target aircraft based on the determination results.

This configuration enables for outputting information regarding the recommended path according to the specified factors.

The sixth invention, in accordance with any of the first to fifth inventions, is an information processing device further comprising a path prediction unit that acquires location prediction information indicating the future positions of other aircraft different from the target aircraft in a time series by applying input information to a recurrent neural network with an attention mechanism for sharing conditions among neural networks used for each of the two or more other aircraft flying simultaneously, wherein the related information acquisition unit acquires related information using the location prediction information.

This configuration enables for outputting information based on the location prediction information of two or more other aircraft with the mutual dependency taken into account.

The seventh invention, in accordance with the sixth invention, is an information processing device, wherein the related information acquisition unit is configured to acquire related information while the target aircraft is in flight, and the output information is information for displaying the positions of one or more other aircraft after the first elapsed time and the second elapsed time, and the positions of the target aircraft after the first elapsed time and the second elapsed time on a map.

This configuration enables for outputting information that facilitates easy recognition of the positional relationship between the target aircraft and other aircraft in the future.

The eighth invention, in accordance with the sixth or seventh invention, is an information processing device, wherein the related information acquisition unit acquires information regarding changes in the path of the target aircraft as related information when it determines that the relationship between the target aircraft and other aircraft in the future meets the relationship conditions based on the control instructions issued in air traffic control.

This configuration enables for outputting information regarding changes in the flight condition based on the relationship between the target aircraft and other aircraft.

The ninth invention, in accordance with any of the first to eighth inventions, is an information processing device further comprising a congestion information acquisition unit that acquires congestion information regarding how congested the destination is as a landing destination based on information regarding aircraft heading to the destination of the target aircraft, wherein the output unit outputs output information based on the congestion information.

This configuration enables for outputting information regarding how congested the destination is as a landing destination.

The tenth invention, in accordance with the ninth invention, is an information processing device, wherein the output unit outputs output information corresponding to the timing of the target aircraft's arrival at the destination based on the congestion information and condition information.

This configuration enables for outputting information, such as predicted congestion at the destination, corresponding to the timing of the target aircraft's arrival at the destination.

The eleventh invention, in accordance with the ninth or tenth invention, is an information processing device further comprising an other aircraft information acquisition unit that acquires information regarding other aircraft different from the target aircraft, wherein the congestion information acquisition unit acquires future congestion information regarding the destination based on information regarding other in-flight aircraft.

This configuration enables for outputting information regarding future congestion at the destination.

The twelfth invention, in accordance with any of the ninth to eleventh inventions, is an information processing device, wherein the output unit outputs output information regarding changes in the flight condition of the target aircraft based on the congestion information and condition information while the target aircraft is in flight.

This configuration enables for outputting information regarding changes in the flight condition based on congestion information and the flight condition.

The thirteenth invention, in accordance with any of the ninth to twelfth inventions, is an information processing device, wherein the output information comprises information for visually displaying how congested the destination is by time slot.

This configuration enables for outputting information that makes observing how congested the destination is by time slot easy.

The fourteenth invention, in accordance with any of the first to thirteenth inventions, is an information processing device further comprising a weather information acquisition unit that acquires weather information comprising information regarding the atmospheric condition, wherein the related information acquisition unit acquires related information comprising prediction results of turbulence intensity in areas corresponding to the path based on the weather information and the output information is information in which the prediction results of the turbulence intensity and the path are associated.

This configuration enables for outputting information regarding the prediction results of turbulence intensity in areas corresponding to the path.

The fifteenth invention, in accordance with the fourteenth invention, is an information processing device, wherein the output information is information for displaying an image that illustrates the prediction results of turbulence intensity overlaid on the path.

This configuration enables for outputting information that makes observing the prediction results of turbulence intensity on the path easy.

The sixteenth invention, in accordance with any of the first to fifteenth inventions, is an information processing device further comprising a weather information acquisition unit that acquires weather information comprising information regarding the atmospheric condition, wherein the related information acquisition unit acquires related information based on the prediction information that it acquires regarding inertia at each point on the path of the target aircraft by applying input information comprising weather information and condition information regarding the target aircraft obtained by the weather information acquisition unit to learning information configured using machine learning based on two or more pairs of learning input information comprising weather information and condition information obtained regarding the flight of aircraft and learning output information comprising inertia information measured at each point on the flight path of the aircraft.

This configuration enables for outputting prediction information regarding inertia at each point on the path of the target aircraft.

The seventeenth invention, in accordance with the sixteenth invention, is an information processing device, wherein the path acquisition unit acquires two or more paths that the target aircraft may follow and the related information acquisition unit determines whether each path meets the recommended conditions based on the obtained prediction information for each path to acquire related information indicating the recommended path for the target aircraft based on the determination results.

This configuration enables for outputting information regarding the recommended path based on prediction information regarding inertia.

### [Effect of Invention]

The information processing device, information processing method, and program of the present invention enables the output of useful output information for flying aircraft.

### [Brief Description of Drawings]

[FIG. 1] A diagram showing the schematic configuration of an operation support system using an information processing device according to one embodiment of the present invention.
[FIG. 2] A block diagram of the information processing device in the present embodiment.
[FIG. 3] A diagram explaining a specific example of acquiring fuel consumption information in the information processing device.
[FIG. 4] A diagram explaining a specific example of acquiring location prediction information in the information processing device.
[FIG. 5] A diagram explaining a specific example of acquiring atmospheric prediction information in the information processing device.
[FIG. 6] A diagram showing an example of output information output by the information processing device.
[FIG. 7] A flowchart explaining an example of the operation flow of the information processing device.
[FIG. 8] A flowchart explaining an example of the related information acquisition process in the information processing device.
[FIG. 9] A diagram explaining a specific example of the operation of the related information acquisition unit when setting altitude in the information processing device.
[FIG. 10] A flowchart explaining an example of using the altitude setting support function in the information processing device.
[FIG. 11] A diagram explaining a specific example of the operation of the related information acquisition unit when setting a shortcut path in the information processing device.
[FIG. 12] A flowchart explaining an example of using the shortcut path setting support function in the information processing device.
[FIG. 13] A diagram showing an example of output information regarding the shortcut path in the information processing device.
[FIG. 14] A diagram showing an example of output information regarding the shortcut path in the information processing device.
[FIG. 15] The first diagram explaining the results of using the shortcut path in the information processing device.
[FIG. 16] The second diagram explaining the results of using the shortcut path in the information processing device.
[FIG. 17] The first diagram showing an example of output information regarding turbulence intensity in the information processing device.
[FIG. 18] The second diagram showing an example of output information regarding turbulence intensity in the information processing device.
[FIG. 19] A diagram showing an example of a user interface for selecting recommended paths provided by the information processing device.
[FIG. 20] A diagram showing an example of a traffic flow visualization screen provided by the information processing device.
[FIG. 21] A diagram showing an example of output information based on congestion information provided by the information processing device.
[FIG. 22] A block diagram of the information processing device according to a modification of the present embodiment.
[FIG. 23] An overview diagram of the computer system in the present embodiment.
[FIG. 24] A block diagram of the computer system.

### [Embodiments]

Hereinafter, embodiments of the information processing device, etc. will be described with reference to the drawings. In the embodiments, components with the same reference numerals perform the same operations, and repetitive explanations may be omitted.

The terms used here are generally defined as follows. However, these terms should not always be interpreted as defined here, and if explained individually below, they should be interpreted in light of that explanation.

An identifier refers to a character or code that uniquely indicates a certain item. The identifier may be an ID or any information that can identify the corresponding item. That is, an identifier may be the name of the item itself it indicates or a combination of codes that uniquely correspond to it.

The path of an aircraft may mean an airway, but it can also mean the process by which the aircraft flies. Information regarding the path may comprise information identifying points and airways that the aircraft should pass through, as well as information indicating the aircraft's speed and posture. Here, a point may be an absolute or relative position identified by latitude and longitude information, or a position identified by a specific waypoint. Information indicating points and airways may or may not comprise altitude information. A path may comprise concepts regarding the scheduled time and speed at which a point is passed.

Position information regarding an aircraft means a point specified by coordinate information of latitude and longitude and altitude. The information specified only by coordinate information is also acceptable. It may also be information specifying an area or airspace with a certain range or information indicating a relative position concerning a specific point.

Inertial related information regarding an aircraft may refer to information concerning stability. Inertial related information comprises disturbance information regarding the aircraft's sway/shake and other information regarding ascent, descent, acceleration, deceleration, and changes in posture around each axis.

Disturbance information comprises acceleration information regarding vertical acceleration, but not limited thereto. Disturbance information may be information regarding angular velocity or information comprising angular velocity information. Acceleration information comprises the waveform of acceleration, i.e., the time series of acceleration values, but not limited thereto. Acceleration information or angular velocity information may be the instantaneous values of acceleration, etc., during a specified period, or the maximum value, etc., during a specified period. Various values indicated concerning a three-dimensional coordinate system may be comprised. Disturbance information may be a score concerning inertia, i.e., a score regarding stability. The inertia-related score indicate the magnitude and frequency of the aircraft's sway/shake, but not limited thereto.

Acquisition comprises obtaining matters input by users and obtaining information stored in the device or other devices (whether pre-stored or generated through information processing in the device). Acquiring information stored in other devices comprises obtaining it via API, etc., and obtaining the contents of document files provided by other devices (including the contents of web pages). Acquisition also comprises obtaining information by performing optical character recognition on image files and obtaining information in a format different from the original information.

Information acquisition may use so-called machine learning methods. The utilization of machine learning methods can be performed as follows. Machine learning methods configure a learning device (learning information) using specific types of input information as inputs and the type of output information to be acquired as outputs. For example, two or more sets of input and output information are prepared beforehand, and the learning device is configured by providing these sets to a module for configuring a machine learning device. The configured learning device is stored in the storage unit. The learning device can also be called a classifier. The machine learning method is not limited to a specific type and can comprise deep learning, random forests, SVM, etc. Various machine learning frameworks such as scikit-learn, TensorFlow, and PyTorch can be used. The term acquisition through machine learning refers to obtaining information using such a learning device.

The learning device is not limited to those obtained by machine learning. The learning device can be a table showing the correspondence between input vectors based on input information and output information. In this case, the output information corresponding to the feature vector based on the input information can be obtained from the table, or a vector approximating the feature vector based on the input information can be generated using two or more input vectors and parameters such as weightings, and the final output information can be obtained using the output information and parameters corresponding to each input vector used for generation. The term acquisition using correspondence refers to obtaining information using such a learning device. The learning device can also be a function representing the relationship between input vectors based on input information and information for generating output information. In this case, output information can be obtained by finding information corresponding to the feature vector based on the input information using the function and using the obtained information. The term acquisition using functions refers to obtaining information using such a learning device.

The term acquired information refers to the output information of such a learning device.

Outputting information comprises the concepts of displaying on a display, projecting using a projector, printing with a printer, audio output, transmitting to external devices, storing in recording media, and delivering processing results to other processing devices or programs. Specifically, it comprises displaying the information on web pages, sending it as emails, printing it, etc.

Reception of information comprises the concepts of receiving information input through input devices such as keyboards and mice, receiving information transmitted from other devices via wired or wireless communication lines, and receiving information read from recording media such as optical disks, magnetic disks, or semiconductor memory.

Updating various information stored in the information processing device comprises changing the stored information, adding new information to the stored information, and deleting part or all of the stored information.

### (Embodiments)

In this embodiment, the information processing device acquires the path the target aircraft may follow, and based on the condition information of the target aircraft, acquires information regarding the path and outputs output information based on the information regarding the path. Weather information can also be acquired and used to obtain information regarding the path. The path the target aircraft may follow can also be acquired based on past paths of aircraft. Hereinafter, an operation support system for aircraft using such an information processing device will be described.

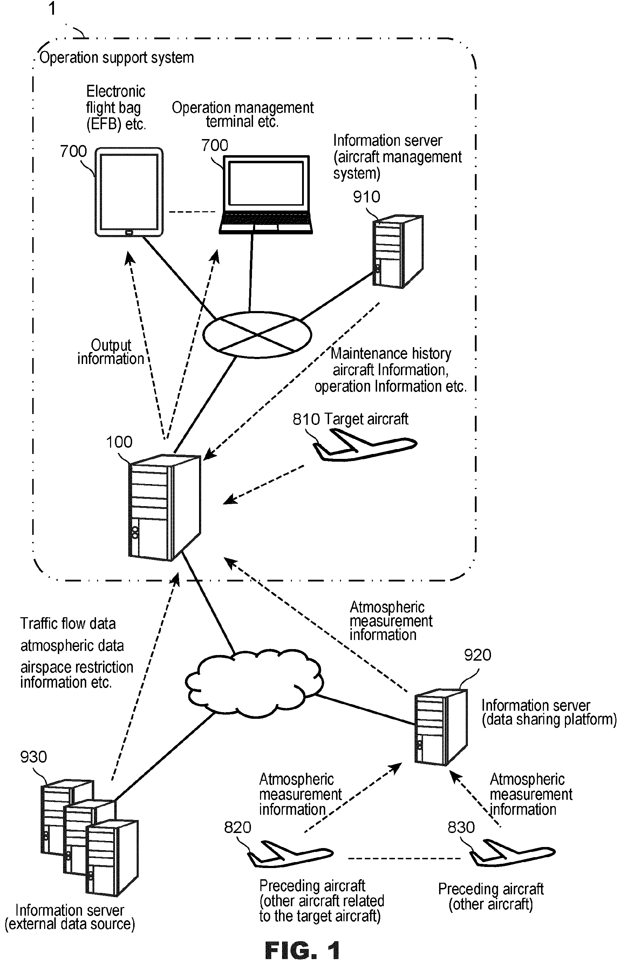

FIG. 1 is a diagram showing the schematic configuration of an operation support system 1 using an information processing device 100 according to one embodiment of the present invention.

As shown in FIG. 1, the operation support system 1 comprises the information processing device 100 and an output terminal 700. In this embodiment, the operation support system 1 is used in conjunction with information servers 910, 920, and 930 inside and outside the operation support system 1. The operation support system 1 is broadly configured to output output information regarding the target aircraft 810 from the information processing device 100 to a specified output terminal 700, etc. Pilots or dispatchers of the target aircraft 810 can use the output information output regarding the target aircraft 810 for its operation.

In this embodiment, the operation support system 1 may be used by an organization such as an airline that operates one or more aircraft. The operation support system 1 may also be used jointly by multiple organizations.

The operation support system 1 relates not only to the target aircraft 810 but also to other aircraft 820 and 830 different from the target aircraft 810. The target aircraft 810 refers to an aircraft that is the subject of various information acquisition processes performed by the information processing device 100 described below. The other aircraft different from the target aircraft also comprise the related aircraft 820 and the other aircraft 830 different from the related aircraft 820. The related aircraft 820 is an aircraft that is associated with the organization operating the operation support system 1. The related aircraft 820 may be referred to as an aircraft that is subject to an efficient operation using the operation support system 1. That is in a case where the operation support system 1 is used for an airline, the related aircraft 820 may comprise aircraft used for the operation of the airline, just like the target aircraft 810. Here, an airline means a single corporate organization, an airline group including multiple corporate organizations, or a company that has a partnership with the airline group. Accordingly, the related aircraft 820 may comprise aircraft of the same company operating the target aircraft 810, other aircraft of a company that forms the same group, or aircraft of a partner company.

In the operation support system 1, the information processing device 100 can communicate with devices such as the output terminal 700 and the information server 910, etc., within the organization via a network such as LAN. The network is not limited thereto and may be the Internet or other communication networks. The information processing device 100 can also communicate with external information servers 920, 930 via the Internet. The network is not limited thereto and may be other communication networks. The connection mode and communication method between the information processing device 100 and the output terminal 700 and between the information processing device 100 and the information servers 910, 920, 930, etc., are not limited thereto. The information processing device 100 may be an electronic computer installed on an aircraft.

The output terminal 700, in this embodiment, is a device that can be the output destination of the output information from the information processing device 100. In this embodiment an electronic flight bag (EFB) used in the operation of the target aircraft 810 can be the output terminal 700. In this embodiment, a device such as an operation management terminal used by an operation manager during the operation of the target aircraft 810 can be the output terminal 700. Different devices from these can also be used as the output terminal 700. If there is an electronic computer provided in the target aircraft 810 that can communicate with the information processing device 100 via a network, the target aircraft 810 itself can be considered as the output terminal 700. If the output terminal 700 is not used, the output information can be directly output to the devices used in connection with the information processing device 100.

The electronic computer used as the output terminal 700 can be various devices, such as a personal computer, a so-called smartphone, a tablet-type information terminal device, etc. In the following example, a personal computer with a keyboard and display not shown in the figure is assumed as the electronic computer used as the output terminal 700, but this is not limited to the above.

The information server 910 is a server device that stores information regarding the aircraft management system. The information server 910 is used to manage information regarding one or more aircraft used by the organization using the operation support system 1. For example, maintenance history, aircraft information, and operation history information of each aircraft can be stored in the information server 910. The information is stored corresponding to identifiers that can identify the respective aircraft, but it is not limited thereto. The information server 910 is configured to transmit the stored information to the information processing device 100 upon a specified inquiry or access from the information processing device 100.

The information server 920 is a server device that stores information regarding a data supply platform for weather information. In this embodiment, atmospheric measurement information regarding the atmospheric condition measured during flight of aircraft is accumulated in the information server 920. The atmospheric measurement information is stored corresponding to each piece of information such as position (coordinates of latitude, longitude, etc.), altitude, and measured time intervals (time points). Atmospheric measurement information comprises one or more measurement values of wind speed, wind direction, static temperature, total temperature, and static pressure, etc. Atmospheric measurement information may also comprise information other than these.

The information server 920 accumulates atmospheric measurement information measured by the related aircraft 820. When the target aircraft 810 flies, the information server 920 also accumulates atmospheric measurement information measured by the target aircraft 810. The information server 920 accumulates atmospheric measurement information measured by other aircraft 830. The timing of accumulating atmospheric measurement information does not matter. In this embodiment, atmospheric measurement information is configured to be transmitted immediately after being measured by the aircraft and accumulated in the information server 920. Atmospheric measurement information is information measured by avionics installed in each aircraft. The accumulated atmospheric measurement information can become high-precision and high-altitude wind distribution in real-time. The information server 920 may perform a process to anonymize the information, i.e., to exclude information that directly indicates which aircraft measured the data when accumulating atmospheric measurement information. The information server 920 is configured to transmit the stored atmospheric measurement information to the information processing device 100 upon a specified inquiry or access from the information processing device 100. Atmospheric measurement information measured by other aircraft 820 and 830, in particular, is called other aircraft measurement information. Other aircraft measurement information is information acquired by other aircraft regarding the flight of the respective aircraft obtained during their flight.

The information server 930 is configured to transmit the stored information to the information processing device 100 upon a specified inquiry or access from the information processing device 100.

One of the information servers 930 stores information indicating past or present traffic flows (hereinafter simply referred to as traffic flows). Traffic flow is the historical location information of aircraft fleet. That is, the information server 930 stores information such as the longitude, latitude, and altitude of each aircraft corresponding to the date and time and identifiers that can identify the aircraft. By accumulating information regarding each aircraft during operation, the information server 930 can provide information regarding the aircraft fleet existing in a specific airspace. Such an information server 930 may be configured to accumulate information regarding the current or past flight conditions output by each aircraft based on standards such as ADS-B (Automatic Dependent Surveillance-Broadcast). The information server 930 may accumulate information regarding the operation condition of actuators used for the flight of each aircraft and information regarding sway/shake and acceleration obtained by avionics, etc., corresponding to the location of each aircraft. In other words, the information server 930 may store condition information regarding the current or past conditions of each aircraft. Among the condition information of each aircraft, the other aircraft condition information regarding the flight of the respective aircraft which is obtained during flight of other aircraft 820 and 830 can be considered as information acquired by other aircraft.

One of the information servers 930 may store forecast information of atmospheric conditions (hereinafter sometimes referred to as weather forecast information) published by public institutions or other organizations. The information server 930 stores weather forecast information comprising atmospheric data such as pressure, temperature, wind speed, and turbulence intensity, corresponding to time, latitude, longitude, altitude, etc. Weather forecasts by organizations such as the Japan Meteorological Agency or NOAA (National Oceanic and Atmospheric Administration) can be used as data sources.

One of the information servers 930 may comprise airspace restriction information. Airspace restriction information is information regarding airspace where aircraft can fly, including information indicating airspace where flight is permitted, airspace where flight is prohibited, and information specifying flight restrictions. In this embodiment, airspace restriction information comprises information regarding altitude restrictions at each airport and information such as the Final Approach Fix (FAF) corresponding to identifiers specifying Standard Instrument Departures (SID) and Standard Arrival Paths (STAR) at each airport.

One of the information servers 930 may comprise information regarding airspace facility usage fees (also referred to as transit fees). Information regarding airspace facility usage fees refers to information regarding various transit fees. Hereinafter, information regarding airspace facility usage fees is sometimes referred to as transit fee information. The transit fee is a fee charged for aircraft flying in a specific airspace. Transit fee information may comprise information to identify the airspace and information regarding the calculation method of the transit fee. Transit fees are charged as consideration for the cost of maintaining and operating facilities to aid navigation, but the reason for charging is not limited thereto and may be for other purposes. Transit fees may also be referred to as navigation aid facility usage fees, overflight fees, territorial overflight fees, etc. Information regarding airspace facility usage fees may be considered comprised in airspace restriction information.

Various devices such as personal computers, server devices, so-called smartphones, and tablet-type information terminal devices can be used as electronic computers used for information servers 910, 920, and 930. Each information server 910, 920, and 930 may be configured by one device, multiple devices working together, or electronic computers embedded in other devices. For example, the information processing device 100 may take on part of the role of information servers 910, 920, and 930. The roles of two or more information servers 910, 920, and 930 may be performed by one device or a group of devices. Information stored in each information server 910, 920, and 930 may be temporarily or continuously accumulated by other devices before being transmitted to the aircraft, etc. In other words, information stored in each information server 910, 920, and 930 may be transmitted to the aircraft, etc., via other devices. The server type is inconsequential and may be a so-called cloud server or ASP server.

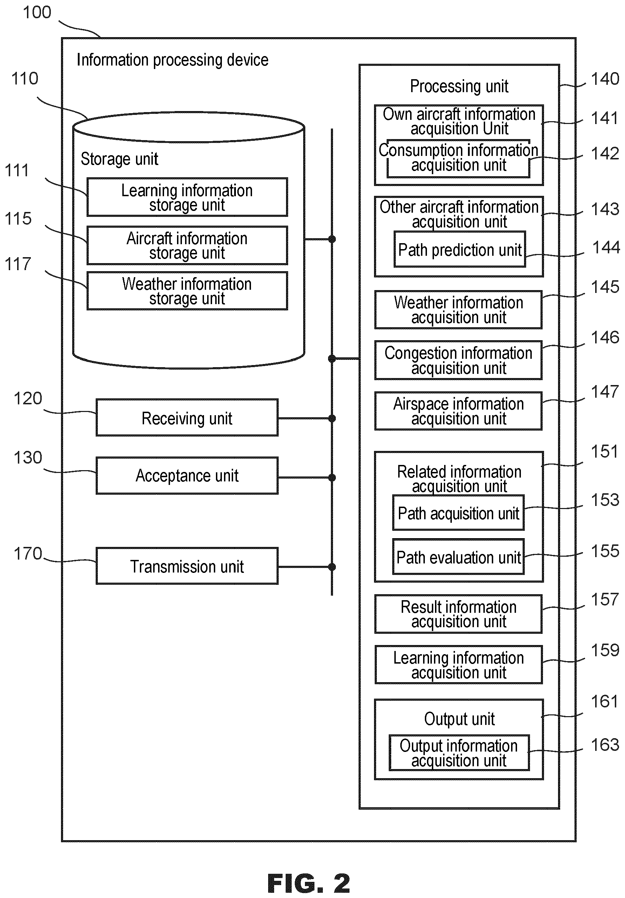

FIG. 2 is a block diagram of the information processing device 100 in this embodiment.

The information processing device 100 comprises a storage unit 110, a reception unit 120, an aircraft fleet, a processing unit 140, and a transmission unit 170. The information processing device 100 is a server device.

The storage unit 110 comprises a learning information storage unit 111, an aircraft information storage unit 115, and a weather information storage unit 117.

The learning information storage unit 111 stores learning information. The learning information may be called a learning device, classifier, or trained model. In this embodiment, the learning information is obtained by machine learning of the learning information acquisition unit 159 described below. In this embodiment, learning information such as weather learning information for acquiring weather information and path learning information for path prediction is used as learning information. The types of learning information are not limited thereto. The details of the learning information and its use will be described below.

The aircraft information storage unit 115 stores information regarding the target aircraft 810 and other aircraft 820, 830. Information regarding each aircraft is stored corresponding to identifiers that can identify the respective aircraft. Information regarding the aircraft may comprise information regarding the body of the target aircraft 810. Information regarding the aircraft may comprise condition information and information acquired by other aircraft. In other words, information regarding the flight history of the target aircraft 810 and other aircraft 820, 830 may be comprised.

The weather information storage unit 117 stores information regarding weather. The weather information storage unit 117 stores weather forecast information obtained from the information server 930 and weather information obtained by the weather information acquisition unit 145 described below. The weather information storage unit 117 also stores past weather information measured and observed in the past. In this embodiment, weather information is stored corresponding to each area and altitude. The weather information storage unit 117 allows weather information corresponding to points or areas specified by latitude and longitude to be specified.

The reception unit 120 receives information transmitted from other devices. The reception unit 120 stores the received information in the storage unit 110.

The aircraft fleet accepts various input operations performed by the user on the information processing device 100. The aircraft fleet accepts information input using input means not shown in the information processing device 100 and information input by input operations performed using a reading device not shown in the information processing device 100 (e.g., a code reader). The aircraft fleet may accept information regarding input operations, etc. transmitted via other devices connected via a network, etc. The accepted information is stored in the storage unit 110.

The processing unit 140 comprises an own aircraft information acquisition unit 141, an other aircraft information acquisition unit 143, a weather information acquisition unit 145, a congestion information acquisition unit 146, an airspace information acquisition unit 147, a related information acquisition unit 151, a result information acquisition unit 157, a learning information acquisition unit 159, and an output unit 161. The processing unit 140 performs various processes, such as the processes performed by the units of the processing unit 140 described below.

The own aircraft information acquisition unit 141 acquires condition information regarding the condition of the target aircraft 810. The condition of the target aircraft 810 comprises information such as the position of the target aircraft 810, as well as concepts including the characteristics of the equipment, operational history, fuel consumption (including predicted values), and flight schedule (how it is planned to fly). The condition may be the pre-flight condition, the in-flight condition, or the post-flight condition. The own aircraft information acquisition unit 141 stores the acquired condition information in the aircraft information storage unit 115.

In this embodiment, the own aircraft information acquisition unit 141 is configured to acquire condition information using the plan information regarding the flight plan of the target aircraft 810, the equipment characteristic information indicating the characteristics of the equipment of the target aircraft 810, and the operational history information regarding the operational history of the target aircraft 810. The own aircraft information acquisition unit 141 may be configured to acquire condition information using at least one of these pieces of information. Acquiring condition information using plan information, equipment characteristic information, and operational history information is a concept that comprises obtaining condition information by performing calculations, etc., using the information, and obtaining each piece of information as condition information.

Plan information may be information indicating the content of the flight plan itself or information obtained from the flight plan. The own aircraft information acquisition unit 141 can acquire plan information using information input into the output terminal 700 or registered in the information server 910.

Equipment characteristic information may be information that can specify the model or engine model, etc. The own aircraft information acquisition unit 141 is configured to acquire equipment characteristic information using information registered in the information server 910.

Operational history information may be information regarding maintenance history and operational history, etc. The own aircraft information acquisition unit 141 is configured to acquire equipment characteristic information using information registered in the information server 910.

The own aircraft information acquisition unit 141 may acquire plan information based on input operations accepted by the aircraft fleet. The own aircraft information acquisition unit 141 may acquire information regarding the flight condition of the target aircraft 810. For example, the own aircraft information acquisition unit 141 may be configured to acquire information regarding the current and past flight conditions output by the target aircraft 810 based on standards such as ADS-B. In this case, information regarding past flight conditions may be regarded as operational history information.

In this embodiment, the own aircraft information acquisition unit 141 is configured to acquire disturbance information regarding the inertia of the target aircraft 810 obtained by an inertia measurement device (not shown) installed in the target aircraft 810 as condition information. Disturbance information may be referred to as information regarding the flight condition of the target aircraft 810. Disturbance information is, but not limited to, time-series information indicating the transition of vertical acceleration. Disturbance information may be instantaneous values of acceleration, at a specific time, maximum values, etc., during a specific period. Disturbance information may be a score regarding the magnitude of the sway/shake of the target aircraft 810 or information classifying the magnitude of the sway/shake into specific ranks. Disturbance information may be a score indicating the quality of the sway/shake (e.g., the degree to which passengers feel uncomfortable). Disturbance information may be information regarding the angular velocity of the target aircraft 810. In this embodiment, the own aircraft information acquisition unit 141 acquires disturbance information corresponding to the position information corresponding to the terminal information. Corresponding to position information may be referred to as corresponding to the path of the target aircraft 810. In other words, the own aircraft information acquisition unit 141 acquires disturbance information at points on the path of the target aircraft 810. The correspondence between the path flown by the target aircraft 810 and the time and the time series of disturbance information can clarify the correspondence between the path of the target aircraft 810 and its disturbance information. Here, the position may be the position indicated by latitude or longitude, the position regarding altitude, or the position regarding both.

In this embodiment, the own aircraft information acquisition unit 141 comprises a consumption information acquisition unit 142 that acquires fuel consumption information regarding the fuel consumption rate. Fuel consumption information is information indicating the fuel consumption rate when the target aircraft 810 flies in a specific condition under a given weather condition. The consumption information acquisition unit 142 stores the acquired fuel consumption information in the aircraft information storage unit 115 corresponding to the identifier specifying the target aircraft 810.

In this embodiment, the consumption information acquisition unit 142 acquires fuel consumption information using consumption learning information stored in the learning information storage unit 111. The consumption information acquisition unit 142 acquires fuel consumption information by using machine learning-based acquisition, acquisition using correspondence relationships, or acquisition using functions. The input information comprises information regarding the flight, weather information, and equipment characteristic information. The output information (acquired information) is fuel consumption information. The acquired information may comprise information that can be used to calculate or determine fuel consumption information through calculations or comparisons with other criteria.

In this embodiment, the consumption information acquisition unit 142 is preferably configured to acquire fuel consumption information considering the weight change of the aircraft during navigation. This allows for high-precision calculation and evaluation of the energy cost associated with ascending and descending during cruising.

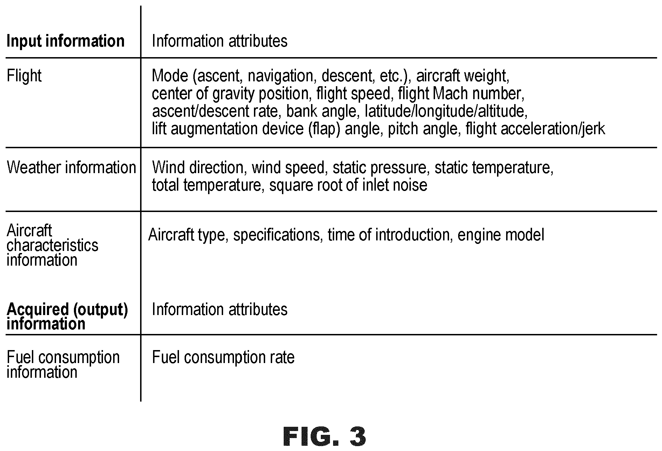

FIG. 3 is a diagram explaining a specific example of acquiring fuel consumption information in the information processing device 100.

FIG. 3 shows a specific example of input information used for acquiring fuel consumption information by the consumption information acquisition unit 142 described above and a specific example of acquired information. The consumption information acquisition unit 142 can output attribute values of the acquired information using input information comprising various attribute values and consumption learning information.

As shown in the figure attribute values such as mode (climb, cruise, descent), aircraft weight, aircraft center of gravity position, flight speed, flight Mach number, climb/descent speed, bank angle, latitude, longitude, altitude, lift auxiliary device (flap) angle, pitch angle, flight acceleration, and jerk, etc., are used as flight-related information. Wind direction, wind speed, static pressure, static temperature, total temperature, and the square root of the inlet static temperature are used as weather information attribute values. Equipment characteristic information comprises attribute values such as aircraft type, specifications, introduction period, and engine model. The acquired information, which is fuel consumption information, comprises attribute values such as fuel consumption rate.

Returning to FIG. 2, the other aircraft information acquisition unit 143 comprises a path prediction unit 144. The other aircraft information acquisition unit 143 acquires other aircraft information regarding other aircraft 820 and 830 different from the target aircraft 810. The other aircraft information acquisition unit 143 stores the acquired other aircraft information in the aircraft information storage unit 115. In this embodiment, the other aircraft information acquisition unit 143 acquires other aircraft information in a specific airspace regarding own aircraft information acquired by the own aircraft information acquisition unit 141, but it is not limited thereto. The specific airspace regarding own aircraft information is the airspace regarding the path of the target aircraft 810, such as the vicinity of the path of the target aircraft 810 on the flight plan.

The other aircraft information acquisition unit 143 acquires position information regarding other aircraft 820 and 830. Position information regarding other aircraft refers to information such as the longitude, latitude, and altitude of other aircraft 820 and 830 at a specific time. Position information regarding other aircraft may not comprise altitude information. Position information regarding other aircraft in the past or present can be acquired based on information stored in the information server 930.

In this embodiment, the other aircraft information acquisition unit 143 acquires other aircraft information (hereinafter referred to as location prediction information) regarding the positions of one or more other aircraft 820 and 830 at a specific elapsed time based on position information of one or more other aircraft 820 and 830. In other words, other aircraft information may comprise information regarding the positions of one or more other aircraft 820 and 830 at a specific elapsed time. In other words, other aircraft information may be referred to as information regarding the future traffic flow including one or more other aircraft 820 and 830.

In this embodiment, the other aircraft information acquisition unit 143 acquires position prediction information using the route prediction unit 144. The route prediction unit 144 acquires position prediction information using route learning information stored in the learning information storage unit 111. The acquisition of position prediction information by the route prediction unit 144 can be realized by using machine learning as described above, using corresponding relationships, or using functions. Here, the input information can comprise the history of position information of the group of other aircraft 820 and 830 (hereinafter sometimes simply referred to as the aircraft fleet), flight information of the aircraft fleet, vicinity information of the destination airport, aircraft (body) information of the aircraft fleet, and weather information. For weather information, past weather information and future weather forecasts can be used, but it is not limited thereto. The acquired information may be configured so that the position information group of the aircraft group after a certain period has elapsed is output as position prediction information. That is the information on the time, latitude, and longitude for each aircraft may be output. The acquired information may also comprise altitude-related information. The acquired information may be output in such a way that position information can be acquired through calculations or judgments based on other criteria.

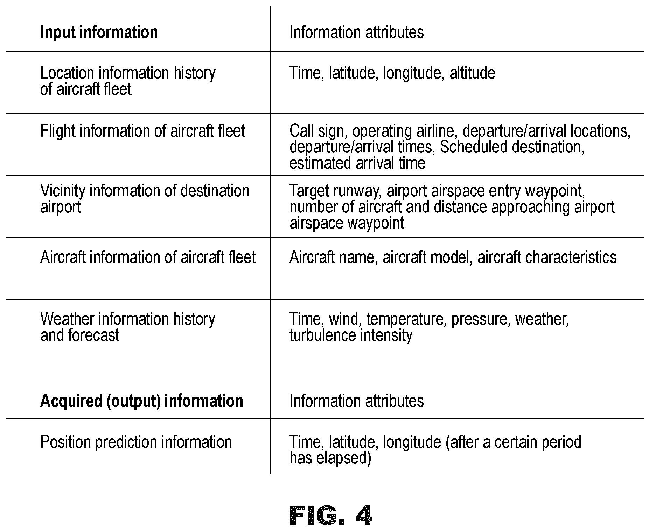

FIG. 4 is a diagram explaining a specific example of acquiring location prediction information in the information processing device 100.

FIG. 4 shows a specific example of input information used for acquiring location prediction information by the path prediction unit 144 described above and a specific example of acquired information. The path prediction unit 144 can output attribute values of the acquired information using input information comprising various attribute values and path learning information.

As shown in FIG. 4 attribute values such as date and time, latitude, longitude, and altitude are used as historical position information of the aircraft fleet. Such historical position information can be provided for each aircraft as JSON format data such as "{aircraft_id: [[2021-10-08 12:34:56, 35.12345, 136.12345], [...], ...], ...}". "Aircraft_id" is an identifier of the aircraft. The data format is not limited thereto and can be set as appropriate. Attribute values such as call sign, operating airline, origin/destination, departure/arrival times, arrival destination, and estimated arrival time are used as flight information of the aircraft fleet. Attribute values such as the runway in use, airport airspace entry waypoint, the number and distance of aircraft approaching the airport airspace waypoint are used as vicinity information of the destination airport. Attribute values such as aircraft name, type, and characteristics are used as aircraft information of the aircraft fleet. Attribute values such as date and time, wind, temperature, pressure, weather, and turbulence intensity are used as weather.

Attribute values such as date and time, latitude, and longitude are used as the acquired information, which is the position information group of the aircraft group after a certain period. The position information group may also comprise altitude. The position information group can also be referred to as traffic flow. The position information group is position prediction information that comprises position information corresponding to each of the related other aircraft 820 and 830.

Here, learning information obtained using a neural network with a recursive structure, utilizing machine learning techniques, is preferably used as path learning information. In this embodiment, the path prediction unit 144 is preferably configured to acquire location prediction information that indicates the future positions of other aircraft 820 and 830, different from the target aircraft 810, in a time series by applying input information to the neural network with a recursive structure.

In this embodiment, the path prediction unit 144 is preferably configured to acquire location prediction information of each of the other aircraft 820 and 830 flying simultaneously using path learning information, which is a prediction model comprising a pooling layer for sharing the conditions within the neural network used for each of the other aircraft 820 and 830 flying simultaneously. This can be achieved as shown in the above-mentioned Non-Patent Document 1. This allows obtaining results of location prediction information reflecting situations where two or more other aircraft 820 and 830 flying simultaneously interact with each other.

In such path learning information, structure with an attention mechanism in the pooling layer is preferably used to model the interactions between other aircraft 820 and 830. This allows obtaining highly accurate location prediction information that effectively reflects the learning results of past interactions between multiple aircraft.

For example, path learning information that models two or more other aircraft 820 and 830 flying simultaneously using an LSTM (Long short-term memory) structure to obtain outputs with the spatiotemporal characteristics of the interactions between the aircraft taken into account by sharing the hidden conditions of the LSTM networks with each other in the pooling layer with a multi-head attention mechanism is preferably used. This enables for acquiring location prediction information that takes into account the interactions between the aircraft.

The other aircraft information acquisition unit 143 may output acquired information using path learning information for each aircraft targeted for location prediction information acquisition by the path prediction unit 144 and aggregate the obtained acquired information to acquire location prediction information for the aircraft fleet. The path of the aircraft can be changed according to various factors shown in the input information as described above. The path selection tendency may also vary depending on the aircraft model, airline, flight, section, congestion status, deviation from the scheduled time, etc. By obtaining location prediction information based on these input information, more accurate location prediction information can be obtained.

The other aircraft information acquisition unit 143 acquires information acquired by other aircraft regarding the flight of other aircraft 820 and 830 acquired during flight as other aircraft information. Such information acquired by other aircraft can be acquired from the information server 920 or the information server 930, but is not limited thereto. For example, the other aircraft information acquisition unit 143 may be configured to acquire the information by receiving information output from other aircraft 820 and 830, etc. In this embodiment, the other aircraft information acquisition unit 143 acquires atmospheric measurement information (other aircraft measurement information) regarding the atmospheric conditions measured by other aircraft 820 and 830 as other aircraft information. That is, the other aircraft information comprises other aircraft measurement information measured by other aircraft 820 and 830. The other aircraft information acquisition unit 143 acquires other aircraft measurement information stored in the information server 920 and accumulates it in the weather information storage unit 117. It can be considered that the other aircraft information does not comprise other aircraft measurement information, and the weather information acquisition unit 145 acquires the other aircraft measurement information as weather information. In addition, the other aircraft information acquisition unit 143 may be configured to acquire and store other aircraft condition information, comprising information regarding the operating condition of actuators, etc. used for the flight of other aircraft 820 and 830 at a specified location or airspace, and information regarding sway/shake, acceleration, etc. obtained by avionics, etc., as other aircraft information.

Returning to FIG. 2, the weather information acquisition unit 145 acquires weather information, which comprises information regarding the atmospheric condition. The weather information acquisition unit 145 stores the acquired weather information in the weather information storage unit 117. In this embodiment, the weather information acquisition unit 145 acquires weather information by altitude for the airspace regarding the path of the target aircraft 810. The airspace for flight may also be referred to as the evaluation target airspace of the path. The airspace regarding the path of the target aircraft 810 is the airspace near the path of the target aircraft 810 on the flight plan acquired by the own aircraft information acquisition unit 141, but is not limited thereto. The weather information acquisition unit 145 acquires weather forecast information from the information server 930 and stores the acquired information as weather information. The weather information acquisition unit 145 acquires past weather information and stores the acquired information as weather information.

In this embodiment, the weather information acquisition unit 145 acquires atmospheric prediction information regarding the atmospheric condition in the future as weather information. The weather information acquisition unit 145 acquires atmospheric prediction information based on forecast information of the atmospheric condition in the airspace where the target aircraft 810 will fly, obtained from the information server 930, and other aircraft measurement information regarding the airspace stored in the weather information storage unit 117. In this case, it may be said that the weather information acquisition unit 145 acquires weather information based on forecast information of the atmospheric condition regarding the airspace and information acquired by other aircraft regarding the airspace.

The weather information acquisition unit 145 may acquire weather information using other aircraft condition information regarding the airspace instead of or in addition to other aircraft measurement information regarding the airspace. As a specific example, other aircraft condition information, such as the presence of sway/shake and the operating status of actuators, can be used to acquire atmospheric prediction information, such as whether or not the airflow is unstable. For example, prediction results regarding turbulence intensity can be acquired as atmospheric prediction information, such as whether or not the airflow is unstable. In this case, considering that the effect of airflow on sway/shake and the operating status of actuators differs depending on the aircraft model, it may be configured to acquire atmospheric prediction information using other aircraft condition information of each aircraft model or each size group of aircraft. As a more specific example, it may be configured to acquire atmospheric prediction information by utilizing flight record data called QAR data as training data to process by aircraft model or size group of aircraft.

The weather information acquisition unit 145 acquires atmospheric prediction information using weather learning information stored in the learning information storage unit 111. The weather information acquisition unit 145 acquires atmospheric prediction information using machine learning-based acquisition, acquisition using correspondence relationships, or acquisition using functions, as described above. Here, weather forecast information and other aircraft measurement information measured by preceding aircraft can be used as input information. The acquired information is atmospheric prediction information. It may be configured to output information, that can be used to acquire atmospheric prediction information, etc., through calculations or judgements based on other criteria, as acquired information.

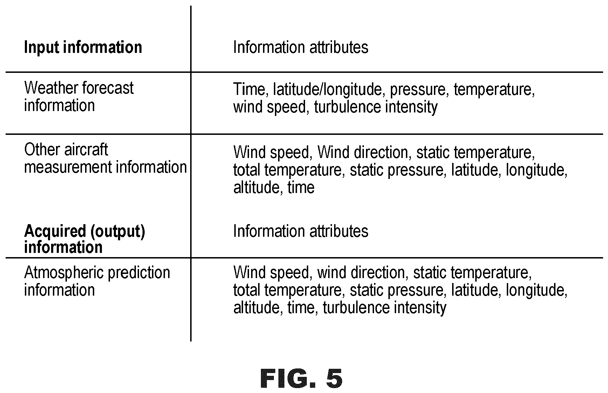

FIG. 5 is a diagram explaining a specific example of the acquisition of atmospheric forecast information in the information processing device 100.

FIG. 5 shows specific examples of input information used for acquiring atmospheric forecast information and examples of the acquired information. By using input information that comprises various attribute values and path learning information, the weather information acquisition unit 145 can output attribute values of the acquired information.

As shown in FIG. 5, attribute values such as time, latitude and longitude, pressure, temperature, wind speed, and turbulence intensity are used as weather forecast information. Attribute values such as wind speed, wind direction, static temperature, total temperature, static pressure, latitude, longitude, altitude, and time are used as other aircraft measurement information. Attribute values such as wind speed, wind direction, static temperature, total temperature, static pressure, latitude, longitude, altitude, time, and turbulence intensity are used as the acquired atmospheric forecast information.

Returning to FIG. 2, the congestion information acquisition unit 146 acquires congestion information concerning how congested destination is as a landing destination for the aircraft based on information regarding aircraft heading towards the destination of the target aircraft 810. The congestion information acquisition unit 146 stores the acquired congestion information in the storage unit 110. Congestion information may be stored with corresponding identifiers that specify destinations or time periods. Congestion information may also be stored for each destination, as well as for each season, day, or week.

The acquisition of congestion information can be based on information regarding aircraft that arrived at the destination in the past. For example, information regarding the number of aircraft arriving per unit time in the past for each destination airport can be obtained. The congestion information acquisition unit 146 can use statistically processed information of past performance information to acquire congestion information regarding the number of arrivals per unit time for each time period. Congestion information can also comprise information indicating the congestion level under specific conditions (e.g., time, weather, date) based on the position information history of previously arrived aircraft.

The acquisition of congestion information may also be carried out by predicting the congestion level based on other aircraft 820 and 830 currently in flight. That is, the congestion information acquisition unit 146 can acquire future congestion information of the destination based on other aircraft information regarding aircraft currently in flight. For example, learning information regarding congestion information is configured by using an indicator showing the congestion level (such as, the number of arrivals per hour or the number of vectoring occurrences, but not limited thereto) as output information, and using location information of previously arrived aircraft, time period, weather information, etc. as input information. By applying other aircraft information obtained for aircraft 820 and 830 currently in flight to the learning information, the congestion information acquisition unit 146 can acquire congestion information regarding the indicators showing the congestion level. Machine learning-based acquisition, acquisition using correspondence relationships, or acquisition using functions can be used for the configuration and use of learning information. Congestion information may also be predicted using weather conditions, seasons, days of the week, time periods, flight information, such as the position and speed of each aircraft heading to the airport, originally planned flight schedules, and airspace restriction information.

Information regarding aircraft departing from the destination can also be used for acquiring congestion information. Further, congestion information can be acquired based on the frequency of aircraft entering or departing the runways at the destination and its surrounding runways can be calculated using ADS-B information.

The airspace information acquisition unit 147 acquires airspace information that comprises information regarding the airspace in which the aircraft can fly. The airspace information acquisition unit 147 stores the acquired airspace information in the storage unit 110. The airspace information acquisition unit 147 acquires airspace information regarding the airspace that is related to the path of the target aircraft 810. The airspace information acquisition unit 147 may acquire airspace information for the vicinity of the path of the target aircraft 810 on the flight plan.

The airspace information acquisition unit 147 may acquire such airspace information from an information server 930 that contains airspace restriction information. Airspace information may also be acquired based on information obtained from the information server 930. Airspace information may comprise transit fee information.

In this embodiment, the airspace information acquisition unit 147 may also acquire airspace information indicating airspace where the course of the aircraft can be changed. That is, airspace information may comprise either i) information defining flight-restricted airspace or ii) airspace where course changes are permitted. Such airspace information can be acquired based on information provided by the information server 930 or information entered beforehand by users and was accepted by the acceptance unit 130. The airspace information acquisition unit 147 may also acquire information entered beforehand by users such as pilots or flight operators regarding permitted airspace as airspace information. The airspace information acquisition unit 147 may also acquire information regarding permitted airspace based on past other aircraft information, i.e., historical position information of aircraft fleet, as airspace information. For example, by statistically processing the historical position information of aircraft fleet, information regarding airspace where flying is permitted can be acquired.

The related information acquisition unit 151 comprises a path acquisition unit 153 and a path evaluation unit 155. The related information acquisition unit 151 acquires related information regarding the path of the target aircraft 810 based on condition information. The related information acquisition unit 151 may also be configured to acquire related information using other information. In this embodiment, the related information acquisition unit 151 is configured to acquire related information based on condition information, as well as other aircraft information and weather information. The related information acquisition unit 151 may be configured to acquire related information based on condition information and other aircraft information or based on condition information and weather information. Other aircraft information may comprise location prediction information of other aircraft 820 and 830, but is not limited thereto.

In this embodiment, related information refers to information regarding the path that the target aircraft 810 should follow. Related information may also be described as information regarding the trajectory. Related information may comprise information on course, altitude, and speed. That is, the related information acquisition unit 151 is configured to acquire recommended path information as related information, which comprises recommended path information regarding the direction of travel (course), altitude, and speed that the target aircraft 810 should follow. Recommended path information may also be referred to as information indicating a recommended path for the target aircraft 810. Related information may also indicate points, areas, or airspaces that should be avoided by the target aircraft 810 during operation. Information regarding the path may not comprise information on course, altitude, or speed. Thus, the related information acquisition unit 151 may be configured to acquire recommended path information regarding course, altitude, or speed as information regarding the path.

In this embodiment, the related information acquisition unit 151 acquires related information regarding paths that meet specified recommended conditions. That is, the related information acquisition unit 151 acquires recommended path information as related information based on whether each path meets the specified recommended conditions. In this embodiment, the recommended conditions comprise conditions regarding costs associated with the target aircraft 810. The recommended conditions are specified to relate to achieving goals that comprise cost reduction aspects for the target aircraft 810. Here, costs associated with the target aircraft 810 refer to maintenance costs or operation costs. Costs may comprise monetary costs, human costs, time costs, or risk costs. Costs may comprise fuel consumption costs for the target aircraft 810 or transit fees such as airspace facility usage fees incurred during flight of the target aircraft 810. Thus, cost-related conditions may comprise conditions regarding fuel consumption or transit fees. Depending on how the recommended conditions are specified, information based on recommended path information regarding paths, where flying within permissible costs is attainable, can be obtained.

The recommended conditions may also relate to aspects different from those mentioned above, or may comprise conditions regarding other aspects in addition to those mentioned. For example, the recommended conditions may be specified to relate to achieving goals such as reducing flight time or improving safety. The recommended conditions may be specified to relate to achieving goals from two or more of these aspects.

As described below, the recommended conditions may comprise conditions, where the score acquired for a path that leads to achieving the goals is higher or relatively higher than a specified value. Thus, the recommended conditions may comprise a condition regarding the score. The score may also be specified so that the lower the score, the closer the path is to achieving the goals, in which case, the recommended conditions may comprise conditions where the score is lower or relatively lower than a specified value. For example, the recommended conditions may be specified to comprise any of the following a path that consumes less fuel compared to other paths, a path that reduces maintenance costs, a path that lowers transit fees, a path that shortens flight time, or a path that is safer. Thus, a path that is relatively closer to achieving the goals compared to other paths may be specified as a recommended condition.

The recommended conditions are not limited to those that lead to cost reductions for the target aircraft 810. For example, recommended conditions may be specified so that flying a path that meets the conditions for the target aircraft 810 leads to achieving the goals for the related aircraft 820. For example, the recommended conditions may comprise conditions regarding the costs of one or more related aircraft 820 different from the target aircraft. Costs associated with related aircraft 820 refer to maintenance costs or operation costs for related aircraft 820. Thus, information on more efficient paths that lead to achieving the goals for the organization using the operational support system 1, including the target aircraft 810 and related aircraft 820, can be obtained. Indicators of costs may be used as scores, and conditions regarding scores may be set as conditions regarding costs. For example, if a score corresponds to the expected costs incurred by following a path, the recommended conditions may comprise conditions where the score is lower or relatively lower than a specified value.

The related information acquisition unit 151 acquires candidate paths for recommended paths (may also be referred to as "candidates" or "path candidates") via the path acquisition unit 153 as described below. The related information acquisition unit 151 acquires recommended path information from the paths that meet the recommended conditions. In this embodiment, the path acquisition unit 153 acquires two or more paths, and the related information acquisition unit 151 acquires one or more recommended path information from these paths. The path acquisition unit 153 may acquire one path, and the related information acquisition unit 151 may acquire the path as recommended path information if it determines that the path meets the recommended conditions.

In this embodiment, the related information acquisition unit 151 acquires scores corresponding to two or more paths of the target aircraft 810 via the path evaluation unit 155. Based on the acquired scores, the related information acquisition unit 151 acquires information on one or more paths. For example, the related information acquisition unit 151 acquires the path with the highest score (an example of recommended conditions) as recommended path information.

The related information acquisition unit 151 is configured to acquire related information while the target aircraft 810 is in flight. In this embodiment, the related information acquisition unit 151 acquires related information each time specified acquisition conditions are met. The specified acquisition conditions can be specified variously, such as being in a specified stage during the pre-flight process, reaching a specified time, a specified time having elapsed since the last acquisition during flight, flying a specified distance, or reaching a specified position or altitude. For example, if the acquisition conditions are specified to be met relatively frequently, the related information acquisition unit 151 can acquire related information in real-time. The acquisition conditions may also comprise receiving a specified request from the pilot or other users. The acquisition conditions may also be met when receiving specified information from other aircraft 820 and 830 different from the target aircraft 810. For example, it may be information indicating proximity to the target aircraft 810 or information indicating the presence of an airspace with high turbulence intensity sent from other aircraft 820 and 830. When such acquisition conditions are met, the path acquisition unit 153 may acquire the path, and the related information acquisition unit 151 may acquire the related information.

The path acquisition unit 153 may also be referred to as a candidate information acquisition unit. The path acquisition unit 153 acquires the path that the target aircraft 810 may follow based on condition information acquired by the own aircraft information acquisition unit 141. In this embodiment, the path acquisition unit 153 acquires paths based on condition information and other aircraft information. That is, the path acquisition unit 153 acquires paths based on paths previously flown by aircraft. The path acquisition unit 153 acquires paths based on information regarding the flight history of the target aircraft 810 and other aircraft 820 and 830, which is stored in the aircraft information storage unit 115 after acquired by the information processing device 100.

Acquiring a path based on paths preciously flown by aircraft means executing as follows. That is, the path acquisition unit 153, when there are past aircraft that flew paths similar to the approximate path the target aircraft 810 intends to pass through in a given airspace, identifies waypoints and locations on the paths flown by these past aircraft as potentially passable points. The path acquisition unit 153 then acquires paths that can follow these potentially passable points using a specified algorithm as described below. Here, waypoints and paths (airways) are not limited to the ones that are officially designated and used. They may also be information indicating points that are virtually defined in more detail by the path acquisition unit 153.

The path acquisition unit 153 may also extract possible points through which the aircraft can pass based on past aircraft paths with the same departure and destination points. It may treat points on the changed paths of past aircraft differently from points on paths flown without such changes based on whether or not the aircraft applied for and obtained approval for changes in course or altitude from air traffic control (ATC). Treating points differently may involve lowering the priority for selection as possible points through which the aircraft can pass or designating them as possible points through which the aircraft can pass under specific conditions.

The path acquisition unit 153 may also use weather information acquired by the weather information acquisition unit 145. The path acquisition unit 153 may be configured to acquire paths using airspace information acquired by the airspace information acquisition unit 147. That is, the related information acquisition unit 151 can acquire recommended path information for the target aircraft 810 using airspace information.

The recommended conditions may comprise the requirement that the path is within permitted airspace, and the related information acquisition unit 151 may be configured to determine whether the paths acquired by the path acquisition unit 153 meet the recommended conditions using airspace information.

In this embodiment, the path acquisition unit 153 is configured to acquire paths using publicly known algorithms such as Dijkstra's algorithm. In this case, the path acquisition unit 153 can acquire candidates according to specified rules using condition information, other aircraft information, and weather information. For example, the path acquisition unit 153 may acquire paths based on condition information such as flight plans, current positions, altitudes, etc. The path acquisition unit 153 may also acquire paths among those that can be obtained based on condition information, which do not interfere with other aircraft 820 and 830 based on other aircraft information and are determined relatively easy to fly based on weather forecast information.

Further, the path acquisition unit 153 may also be configured to acquire candidate paths for recommended path information using candidate learning information stored in the learning information storage unit 111. That is, the path acquisition unit 153 can acquire a path by using machine learning-based acquisition, acquisition using correspondence relationships, or acquisition using functions. Here, input information can comprise condition information, other aircraft information, weather information, and airspace information. The acquired information is information regarding paths. The path acquisition unit 153 can acquire the acquired information as candidates using this input information. Specific examples are described below. The acquired information may be output as information that can be used to make calculations or decisions regarding paths based on other criteria.

The path acquisition unit 153 may also acquire paths using congestion information and passage fee information.

The path evaluation unit 155 acquires scores based on condition information, other aircraft information, and weather information. In this embodiment, the path evaluation unit 155 is configured to acquire scores using learning information stored in the learning information storage unit 111 as an example. That is, the related information acquisition unit 151 acquires related information using acquired information obtained by applying input information based on paths to learning information.

The acquisition of candidates by the path evaluation unit 155 can be achieved by acquisition by the above-mentioned machine learning, acquisition using a correspondence relationship, or acquisition using functions. Here, input information can comprise information based on paths, condition information, other aircraft information, and weather information. The acquired information is the score. The path evaluation unit 155 can acquire scores as acquired information using this input information. The acquired information may be output as information that can be used to acquire scores through calculations or other methods. Airspace information may also be comprised in the input information. Congestion information and passage fee information may also be comprised in the input information, and the path evaluation unit 155 may also acquire scores based on congestion information and passage fee information.

The learning information used by the path evaluation unit 155 preferably corresponds to information regarding the characteristics of the target aircraft 810. Information regarding the characteristics of the aircraft may comprise the individual aircraft, aircraft model, engine type, weight class, and size group, but is not limited thereto. For example, if learning information is created beforehand for each of these aircraft characteristics, the path evaluation unit 155 can output more accurate acquired information by using learning information corresponding to the characteristics of the target aircraft 810.

The path evaluation unit 155 may calculate and acquire scores for each candidate path based on condition information, other aircraft information, weather information, congestion information, and passage fee information, using the generated evaluation rules. It is not necessary to use all of these pieces of information. The evaluation rules may comprise evaluation criteria such as whether an index regarding atmospheric conditions passes a specific point, speed, comparison results with the flight plan, and distances to other aircraft 820 and 830. For example, for each evaluation criterion, if the criterion is met, a first specified score is reflected in the total score; if not, a second specified score is reflected, and the scores are aggregated to obtain the final score. In the aggregation process, specified calculation formulas may be used to perform addition, multiplication, etc., to calculate the score.

The path evaluation unit 155 may also acquire scores (values for each factor) for each path for factors regarding the evaluation of whether the path is recommended. Factors may comprise the time taken to fly the path, fuel consumption when flying the path, maintenance costs required for flying each path, passage fees incurred when flying each path, and the magnitude of potential turbulence when flying each path. Whether the recommended conditions are met may be determined based on the scores for each factor. In other words, the recommended conditions may comprise criteria regarding two or more factors.

When acquiring related information using scores for each factor in this manner, the related information acquisition unit 151 may acquire related information based on the recommended conditions according to the instructions of users such as pilots and flight operators (those who use the operational support system 1). For example, the related information acquisition unit 151 may determine whether the recommended conditions are met based on the values (scores, etc.) of at least two specified factors for the path and designated information specifying one or more of these factors. For example, among two or more recommended conditions with different criteria for factor scores, related information may be acquired using the recommended condition specified by the user. In other words, the related information acquisition unit 151 may determine whether the recommended conditions are met for a path based on the values of the specified factors. Designated information may also be referred to as priority instructions for selecting factors to be prioritized in path recommendations among two or more factors. For example, if a factor regarding fuel consumption is specified, whether the recommended conditions for fuel consumption are met will be determined. For example, it will be determined whether the fuel consumption for the path is below a specified value, and based on the determination result, recommended path information will be acquired.

The designated information may be accepted and acquired by the acceptance unit 130. For example, the acceptance unit 130, in this embodiment, receives designated information while a graphical user interface used for receiving designated information from the user is being output to the user. That is, the acceptance unit 130 receives an operation for designating one or more factors among two or more factors performed by the user using the graphical user interface output to the user and acquires the designated information. The graphical user interface may be output to the display of the information processing device 100 or sent to and output by an output terminal 700 used by the user. The graphical user interface is configured to allow the user to input designated information by selecting factors to be designated from a drop-down list among two or more factors, but this is not limiting. By using such a user interface, the user can easily input designated information.

In this embodiment, the related information acquisition unit 151 is configured to acquire two or more paths that the target aircraft may follow and acquire related information, comprising recommended path information, based on whether each path meets the recommended conditions. The related information acquisition unit 151 is configured to determine whether each path meets the recommended conditions based on the values of two or more specified factors for each path and designated information specifying one or more of these factors. For example, if the factor regarding fuel consumption is specified and the corresponding recommended condition is that fuel consumption is lower than others, information regarding the path with the lowest fuel consumption among two or more paths will be acquired as recommended path information. If a factor regarding turbulence magnitude is specified and the corresponding recommended condition is that the potential turbulence magnitude is smaller than others, information regarding the path with the smallest potential turbulence magnitude among two or more paths will be acquired as recommended path information. Since the recommended conditions can be set by the user, they can be adjusted to prioritize reducing flight time, minimizing turbulence, or reducing fuel consumption, depending on the situation. Thus, recommended path information suitable for the situation of the target aircraft 810 can be easily obtained.

Determining whether the recommended conditions are met for a path based on the designated information may comprise not only prioritizing the scores of each factor according to the designated information but also calculating the scores for each factor with weights according to the designated information. For example, weighting may be applied to the scores for each factor when aggregating the scores based on the designated information. In other words, the recommended conditions may be fixed, but the scores calculated for the path may vary according to the designated information. Even in such cases, recommended path information suitable for the situation of the target aircraft 810 can be easily obtained.

The related information acquisition unit 151 may be configured to acquire related information that comprises maintenance cost information for the target aircraft 810. In this case the related information acquisition unit 151 applies input information based on the path to learning information corresponding to the characteristics of the target aircraft 810 to acquire an estimated result of the combustor outlet temperature (Tt4) of the target aircraft 810's engine. The related information acquisition unit 151 then acquires related information that comprises maintenance cost information for the target aircraft 810 using the obtained information and the engine operating time for flying the path. For example, by multiplying the combustor outlet temperature (Kelvin) by the engine operating time (seconds), information on the engine usage amount within the maintenance cycle, i.e., information on the remaining time until the next maintenance timing, can be obtained. Based on the related information obtained in this manner, recommended path information that can minimize maintenance costs can be acquired with high accuracy. That is, a path that minimizes the product of the engine's combustor outlet temperature and operating time is recommended to minimize maintenance costs.

Information on maintenance costs can be obtained as follows. For example, input information for estimating the combustor outlet temperature in the learning information can comprise ambient static temperature, ambient total temperature, compressor and fan pressure ratios, flight Mach number, fuel flow rate, and maximum fuel flow rate. Here, the fuel flow rate can be estimated using separate learning information or calculations. Pressure ratio information can be estimated by predicting the low-pressure system shaft rotation speed (percentage) of the engine as an intermediate parameter using separate learning information. Inlet total pressure and sonic velocity information calculated or estimated based on these parameters may also be used. The combustor outlet temperature may also be evaluated by multiplying it by a certain exponent.

Related information is not limited to information that comprises recommended path information. Related information may also comprise scores regarding paths, i.e., scores obtained by the path evaluation unit 155.

Related information may also comprise congestion information of the destination itself or atmospheric forecast information regarding the airspace regarding the path.

The related information may comprise information indicating the presence or absence of issues along the future flight path indicated by the flight plan or the like. Issues may comprise passing through airspace with high turbulence intensity or the presence of a more cost-effective path. In other words, the related information may comprise information containing the predicted results of turbulence intensity in the area corresponding to the path. The related information acquisition unit 151 can acquire the predicted results of turbulence intensity in the area corresponding to the flight path of the target aircraft 810 based on weather information that comprises the predicted results of turbulence intensity over a relatively wide area.

The related information may comprise information regarding the surrounding environment of the path. That is, positions of other aircraft 820 and 830 that will become proximate along the future flight path as indicated by the flight plan or the like, may be indicated based on location prediction information.

The related information may also comprise information indicating speeds, postures, etc., for flying more efficiently along the future flight path indicated by the flight plan or the like.

The related information may also comprise information on two or more recommended paths. By presenting information on multiple paths as options, the user can select a path that is more preferable.

The related information may comprise information regarding changes to the path of the target aircraft 810. The related information may indicate the possibility that the future flight path indicated by the flight plan or the like may need to be changed. For example, in situations that meet specified conditions where a path change is anticipated, information indicating this may be acquired as related information.

The specified conditions may comprise cases where it is likely that a change is needed because the future path will pass through airspace with high turbulence intensity, but are not limited thereto.

The specified conditions may also comprise specific relationship conditions regarding future interactions between the target aircraft 810 and other aircraft 820 and 830, such as cases where it is determined that there is a possibility of interference with the paths of other aircraft 820 and 830. That is, while the target aircraft 810 is in flight, the related information acquisition unit 151 may be configured to acquire information regarding path changes for the target aircraft 810 as related information when it is determined, based on location prediction information, that future interactions between the target aircraft 810 and other aircraft 820 and 830 meet specified relationship conditions. Information regarding path changes may also be referred to as information regarding changes in the flight condition. Information regarding path changes may be the possibility of necessary changes, recommended path information regarding the recommended path after the path has been changed, and information that suggests methods for making changes. These methods may comprise the need for acceleration or deceleration, altitude adjustments, or appropriate descent points, but are not limited to thereto.

Here, the relationship conditions are preferably based on the issuance history of control instructions in air path control. In this embodiment, the relationship conditions preferably relate to the similarity between the relationship of the target aircraft 810 with other aircraft 820 and 830 in the future and the relationship of aircraft with other aircraft 820 and 830 near them at times when control instructions were issued by air traffic control in the past. Whether these specified relationship conditions are met can be determined using learning information with learning input information comprising the positional relationship of an aircraft and other nearby aircraft in specific past situations and their flight statuses, and learning output information indicating whether control instructions were received from air traffic control. In this case, if information indicating that control instructions would be received is obtained using the learning information, it can be determined that the relationship conditions are met. Learning information can be configured and utilized by using machine learning-based acquisition, acquisition using correspondence relationships, or acquisition using functions. By acquiring information regarding path changes for the target aircraft 810 as related information in this way, information regarding flight status changes based on the history of control instructions received from air traffic control can be output. If there is a possibility that the target aircraft 810 will receive control instructions from air traffic control due to its relationship with other aircraft 820 and 830, measures such as preemptively changing the path to a recommended path can be taken. As a result, it enables for efficiently flying the target aircraft 810.

The result information acquisition unit 157 acquires information regarding the operational results of the target aircraft 810 based on the output information when the output information based on the recommended path information is output. For example, if reducing fuel consumption is a goal, the result information acquisition unit 157 acquires the measured fuel consumption of the target aircraft 810 as operational results based on the output information. The result information acquisition unit 157 stores the acquired operational results in the storage unit 110 in association with identifiers that identify the target aircraft 810 and flight-specific identifiers.

The related information acquisition unit 151 may compare the information acquired by the result information acquisition unit 157 with various information predicted based on the recommended path information. The result information acquisition unit 157 may perform correction processing using the comparison results when newly acquiring recommended path information, and acquire the recommended path information based on these results. For example, if reducing fuel consumption is a goal and the fuel consumption predicted based on the recommended path information is compared with the fuel consumption acquired as operational results, the method for predicting fuel consumption based on the recommended path information may be changed based on the comparison results. In such cases, it may be said that the related information acquisition unit 151 acquires information regarding the path of the target aircraft 810 using the information acquired by the result information acquisition unit 157. This enables more accurate acquisition of information regarding the path of the target aircraft 810.

The learning information acquisition unit 159 generates learning information using machine learning methods. The use of machine learning methods can be executed as described above. The learning information acquisition unit 159 stores the configured learning information in the learning information storage unit 111. The learning information may be prepared for each scenario where the information is acquired using the learning information, such as aircraft, aircraft model, engine type, weight class, size group, operational path, season, related area, landing airport, and departure airport. In this case, the learning information acquisition unit 159 generates learning information for the respective scenario using pairs of learning input information and acquired information (output information) for each scenario.

The learning information acquisition unit 159 may regenerate the learning information using the newly acquired results in the information processing device 100 when the results obtained using the acquired information are newly obtained. For example, when operational results of the target aircraft 810 based on output information derived from recommended path information acquired using the learning information are obtained, the learning information acquisition unit 159 may regenerate the learning information using these operational results. The related information acquisition unit 151 may acquire new recommended path information using the learning information generated using the operational results in this way. In this case, the related information acquisition unit 151 can be said to acquire recommended path information for the target aircraft 810 using the operational results obtained by the result information acquisition unit 157.

The output unit 161 outputs information by transmitting it to other devices using a transmission unit 170 or by displaying information on a display device provided in the information processing device 100. The output unit 161 may or may not comprise output devices such as displays and speakers. The output unit 161 may be implemented by the driver software of output devices or by both the driver software and output devices.

In this embodiment, the output unit 161 outputs output information to an output terminal 700 used by a ground user or an electronic flight bag used by the pilot of the target aircraft 810. The ground user may be a ground operations manager, a pilot before departure, or an airline staff member, but is not limited thereto. This enables pilots and ground users to observe the output information using the output terminal 700 and utilize it in operations.

The output unit 161 comprises an output information acquisition unit 163. The output unit 161 can output output information based on information acquired by the related information acquisition unit 151. The output unit 161 can also output information based on disturbance information. The output information is acquired by the output information acquisition unit 163. The output information may be information regarding recommended paths, i.e., the related information itself, or information acquired by the related information acquisition unit 151. The output information may also be information configured by the output information acquisition unit 163 using the related information or other data. The output information may be output by passing it to other processing performed by the processing unit 140 or other units.

The output information acquisition unit 163 may acquire flight settings information used for instrument flight procedure of the target aircraft 810 as output information based on the recommended path information acquired by the related information acquisition unit 151. Flight settings information is information that pilots use to input and operate the target aircraft 810 to fly the target aircraft 810. If the target aircraft 810 can accept information transmitted from the information processing device 100, the flight settings information reflecting the flight can be acquired as output information. The output unit 161 outputs the acquired flight settings information. The output information is not limited thereto. The output information acquisition unit 163 may acquire output information of different formats using information indicating the path. The output unit 161 may be configured to output the information indicating the path directly as output information. The output information acquisition unit 163 may acquire output information using evaluation information based on scores acquired by the path evaluation unit 155 corresponding to the information indicating the path. For example, output information may be configured to display scores or corresponding ranks as images along with the information indicating the path

The output information acquisition unit 163 may be configured to acquire output information for displaying the future positions of other aircraft 820 and 830 on a map along with the future path of the target aircraft 810, when location prediction information of other aircraft 820 and 830 acquired by the other aircraft information acquisition unit 143 is acquired as related information. For example, the information may relate to the surrounding environment of the path. In this case, the positions of other aircraft 820 and 830 relatively close to the target aircraft 810 is preferably indicated based on the location prediction information. That is, the output information may also be referred to as information for displaying on a map both the positions of one or more other aircraft 820 and 830 after the first and second times have elapsed and the positions of the target aircraft 810 after the first and second times have elapsed. This configuration enables the future positions of other aircraft 820 and 830 and their positional relationship with the target aircraft 810 to be easily observable. The location prediction information may comprise information indicating the possible range of positions of other aircraft 820 and 830 after a specified time. In this case, the positions of other aircraft 820 and 830 after the specified time may be indicated on the map with a so-called prediction circle or similar representation, showing the range. This configuration allows more reliably reducing the possibility of the target aircraft 810 and other aircraft 820 and 830 approaching each other.

The output unit 161 outputs output information based on the information acquired by the related information acquisition unit 151 each time specified output conditions are met during flight of the target aircraft 810. Here, the output condition may be the new acquisition of path information by the related information acquisition unit 151. The related information acquisition unit 151 can output information in real-time based on the acquired path information during flight of the target aircraft 810.

The output conditions may differ from the above. For example, the output condition may be detecting that the target aircraft 810 is flying a different path than the one corresponding to the output information when path information is acquired and output information is output. By re-outputting the output information when the path is deviated from, the pilot can be prompted to change the path. The receipt of an output request for output information from the output terminal 700 may also be an output condition. The output unit 161 may be configured to output information under specified conditions regardless of whether the output conditions are met.

In this embodiment, the output unit 161 may be configured to output output information based on congestion information when congestion information is acquired as related information. The output unit 161 may output output information corresponding to the timing of the target aircraft 810's arrival at the destination based on the congestion information and the condition information of the target aircraft 810. The output information may comprise congestion information predicting the congestion level at the destination during the time period around the target aircraft 810's arrival time. By outputting such congestion information, the flight to the destination considering the predicted congestion at the time of arrival can be conducted. In this case, information regarding changes in the flight status of the target aircraft 810 may be used as output information. For example, if it is anticipated that the destination will be crowded upon arrival, requiring waiting for a landing slot, the congestion information may comprise information to reduce speed or take a slight detour to arrive at the destination when congestion is predicted.

The output information acquisition unit 163 may also be configured to acquire output information that visually displays the congestion level at a specific destination when congestion information is acquired. Such information is preferably displayed by indicating the congestion level by time period. By displaying such output information, users such as pilots and managers can observe the congestion status at the destination more easily.

In this embodiment, the output unit 161 may be configured to output output information in a specified output mode (which may be called a notification mode) different from the output mode (normal mode) in the case where the notification condition is not satisfied, when a specified notification condition regarding the information acquired by the path information acquisition unit is satisfied. Here, the notification condition may be the acquisition of new path information by the related information acquisition unit 151, but it is not limited thereto. For example, the notification condition may be a specified difference between the newly acquired path information and the previously acquired path information, or the newly acquired path information requiring a specified change in the flight condition from the current flight condition of the target aircraft 810, or the condition information of the target aircraft 810 being in a specified condition. A specified change in flight condition may be a required change in speed or attitude exceeding a specified amount from the current condition. A specified condition of condition information may be a specified flight time elapsed, a specified amount of remaining fuel, or a distance to a destination or waypoint calculated based on condition information reaching a specified value. The acceptance of an output request for output information from the output terminal 700 may also be a notification condition. There may also be cases where the notification conditions are met when the output conditions are met.

The differences between the normal mode and the specified notification mode may comprise differences in the output destination terminal 700 which is the output destination, the presence or absence of information such as color, text, and specified images when displayed on the output destination terminal 700, the presence or absence of audio output, differences in output means. The difference in the output means may be that one is a display on a screen and the other is the sending of a message by a specified message sending means, or that a so-called push notification is or is not sent in conjunction with the output of the output information.

By configuring the output information to be output in a different mode than usual under specified conditions, it becomes easier for pilots and flight managers to recognize that output information has been output under those conditions.

When multiple pieces of recommended path information are acquired, the output unit 161 may be configured to output each of the multiple paths as output information, or to output output information regarding a path corresponding to a selection instruction to select one of the multiple paths transmitted via the output destination terminal 700.

In this embodiment, the output unit 161 may be configured to output information based on the predicted results of turbulence intensity in the area corresponding to the path when such predicted results are obtained. In this case, the output information acquisition unit 163 preferably acquires output information that associates the predicted results of turbulence intensity with the path of the target aircraft 810. This allows for flight operations using information regarding points on the path where high turbulence intensity is predicted. The output information acquisition unit 163 may also be configured to obtain output information for displaying an image that overlays the predicted results of turbulence intensity on the path. By viewing this image, pilots and other users can easily grasp each point on the path of the target aircraft 810 in relation with the predicted results of turbulence intensity. Consequently when approaching a point where high turbulence intensity is predicted, preparations can be made accordingly, or the path can be altered to avoid such points, facilitating these actions.

The output information acquisition unit 163 may acquire output information regarding the disturbance information in which the transition of the disturbance information is associated with the position of the aircraft based on the disturbance information of an aircraft. For example, the output information regarding the disturbance information is information in which the path of the aircraft is associated with the transition of the disturbance information. For example, information indicating the magnitude of the sway/shake at each point on the path of the aircraft can be used as the output information. Information showing such information on a map can be used as the output information. Information showing the path and the magnitude of the sway/shake on a map can be said to be highly convenient information that makes it easy for a user to intuitively grasp positions with large motion and positions with small motion. The output information may be map-related information used to display the information shown on the map. The output information regarding the disturbance information may be information that is output or used in a form similar to information called PIREP (on-board weather report, pilot report).

The output unit 161 may be configured to output output information regarding disturbance information when it is determined that the output conditions are met as described above. However, it may also be configured to output output information regarding disturbance information in specific situations regardless of whether the above output conditions are met.

In this embodiment, the output information acquisition unit 163 acquires output information based on the disturbance information of each of the two or more aircraft 810 that flew in a specified time period. For example, the output information acquisition unit 163 acquires disturbance information corresponding to the flight in the specified time period from among the disturbance information stored in the storage unit 110, and acquires output information based on the acquired disturbance information. When two or more aircraft 810 are flying in a specified time period, the output information acquisition unit 163 acquires disturbance information corresponding to the flight of each aircraft 810. That is, the output information acquisition unit 163 acquires each disturbance information of the two or more aircraft 810. When an aircraft 810 is flying in a specified time period, the output information acquisition unit 163 may be configured to acquire output information based on the disturbance information of the aircraft 810. The specified time period here may be a time period designated by a user, or may be a time period specified by the output information acquisition unit 163. The time period specified by the output information acquisition unit 163 may also be referred to as a time period specified in relation to a scenario where the output information is used. For example, when acquiring output information, a specified period from that point in time to the past may be set as the specified time period. When a request to acquire information on an aircraft is accepted, a time period specified based on the path of the aircraft may be set as the specified time period. For example, the specified time period may be specified based on recommended path information acquired by the related information acquisition unit 151. For example, the specified time period may be specified as a time period regarding each scheduled time depending on the scheduled departure time and scheduled landing time of the aircraft. The output information acquisition unit 163 may also specify the specified time period depending on the information regarding the position of the output destination terminal 700 to which the output information is to be output.

The output information acquisition unit 163 may also acquire output information for a specified area based on the disturbance information of each of two or more aircraft that flew during the specified time period. The specified area may be an area designated by the user or an area specified by the output information acquisition unit 163. For example, the output information acquisition unit 163 may identify the area regarding the path as the specified area based on the recommended path information acquired by the related information acquisition unit 151.

The output information acquisition unit 163 may be configured to select the disturbance information used to acquire the output information based on the position information of the output terminal 700.

Using output information based on disturbance information during the specified time period allows easy use of information on locations and times where turbulence is likely to have occurred during that period. Using output information based on two or more disturbance information sources during the specified time period allows to more accurately identify locations and times where turbulence is likely to have occurred during that period. Using disturbance information for each aircraft that flew different paths enables the area where turbulence is likely to have occurred during the specified time period to be two-dimensionally identified. Such information is useful for subsequent aircraft to avoid turbulence. When outputting information based on two or more disturbance information sources, the output information acquisition unit 163 preferably acquires information to display the paths of the two or more aircraft 810 along with the transitions of their disturbance information on a map. This allows users to intuitively grasp the areas where turbulence is likely to have occurred.

As an example, consider acquiring output information useful for the flight of the target aircraft 810 when recommended path information is acquired for a currently flying or soon-to-be-flying target aircraft 810. In this case, the output information acquisition unit 163 identifies the surrounding area of the planned path of the target aircraft 810 based on the recommended path information and acquires disturbance information for aircraft that flew in the target area during a specified time period in the past (e.g., the past hour) from the storage unit 110. The output information is acquired using the obtained disturbance information. The output information may comprise information for indicating on a map the locations where sway/shake was observed with pins or heat maps indicating sway/shake intensity.

The output information acquisition unit 163 may acquire output information to display paths on a map based on recommended path information and disturbance information. It may also acquire output information to display weather-related information, such as the predicted locations and probabilities of turbulence-caused disturbances, on the map along with the path based on weather information (e.g., atmospheric forecast information). The output information acquisition unit 163 may acquire output information based on weather information and disturbance information. This allows users to consider avoiding areas where sway/shake is expected or to prepare for predicted sway/shake during flight.

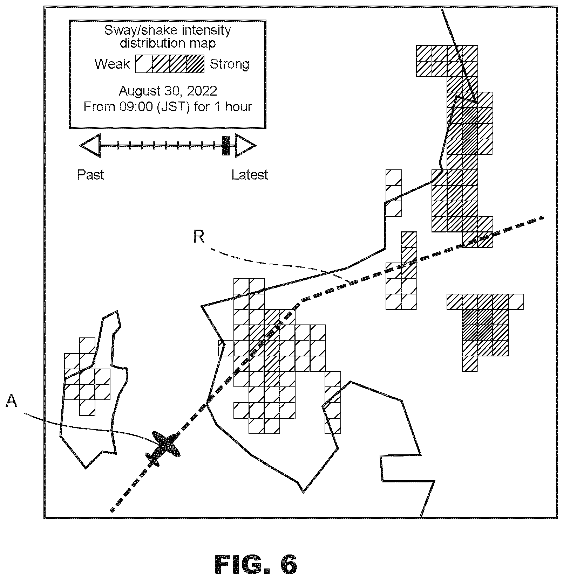

FIG. 6 shows an example of output information output by the information processing device 100.

In FIG. 6, as an example of output information, map information comprising a heat map of sway/shake intensity measured during a specified past period is schematically shown. The map information depicts areas of detected sway/shake intensity, colored according to intensity, overlaid on the terrain. The map information also shows the position of the target aircraft 810 as icon A. The path R, which is the recommended path information, is indicated by a dashed line. Based on such map information, the path R of the target aircraft 810 and information regarding the detected sway/shake intensity in its vicinity can easily be grasped. The map information may comprise information regarding the displayed time period. Time period change instructions may be accepted, and the content of the displayed output information may be changed accordingly.

The transmission unit 170 transmits information to other devices capable of communication via a network. The transmission unit 170 transmits output information output by the output unit 161.

The storage unit 110 and the terminal storage unit 610 mentioned above are preferably non-volatile recording media, but volatile recording media can also be used. These units store information acquired by the respective devices, but the process of storing information is not limited thereto. Information may be stored via recording media, transmitted via communication lines, or entered via input devices.

The processing unit 140 and the terminal processing unit 640 mentioned above are usually implemented with an MPU and memory. The processing procedures of the processing unit 140 and the terminal processing unit 640 are typically achieved by software recorded on recording media such as ROM. However, they may also be implemented by hardware (dedicated circuits).

The input means used for inputting information acceptable to the acceptance unit 130 and the terminal reception unit 630 may comprise a numeric keypad, keyboard, mouse, or menu screen, among others. The acceptance unit 130 and the terminal reception unit 630 may be achieved by device drivers for input means such as numeric keypads and keyboards or control software for menu screens.

The reception unit 120 and the terminal reception unit 620 are typically achieved by wireless or wired communication means, but they may also be achieved by means for receiving broadcasts.

Similarly, the transmission unit 170 and the terminal transmission unit 670 are typically achieved by wireless or wired communication means, but they may also be achieved by broadcasting means.

The next section explains the operation flows of the information processing device 100. The information processing device 100 performs various operations as described below. These operations are carried out by the processing unit 140 executing control operations using each part.

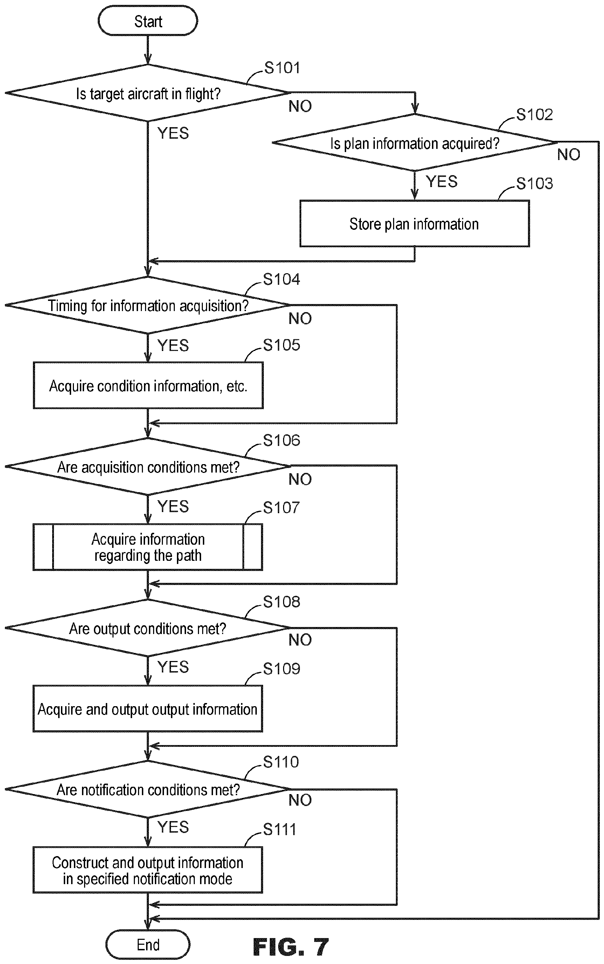

FIG. 7 is a flowchart illustrating an example of the operation flow of the information processing device 100.

(Step S101) The processing unit 140 determines whether the target aircraft 810 is in flight. If it is in flight, the process proceeds to Step S104; otherwise, it proceeds to Step S102.

(Step S102) The processing unit 140 determines whether plan information for the target aircraft 810 has been acquired. For example, if flight plan for the next flight has been input, the processing unit 140 determines that plan information has been acquired. If plan information has been acquired, the process proceeds to Step S103; otherwise, the process ends.

(Step S103) The processing unit 140 stores the acquired plan information in the aircraft information storage unit 115. The process then proceeds to Step S104.

(Step S104) The processing unit 140 determines whether the information acquisition timing has arrived. For example, it is determined that the information acquisition timing has arrived if an instruction is given by the user, if plan information is acquired, or if a certain period has passed since the last acquisition during flight. If the information acquisition timing has arrived, the process proceeds to Step S105; otherwise, it proceeds to Step S106.

(Step S105) The processing unit 140 acquires condition information, etc.. The information acquisition may be performed as described above. Other information such as other aircraft information, weather information, congestion information, and airspace information may also be acquired. Information regarding operational results may also be acquired. The generation and update of learning information may also be performed. The process then proceeds to Step S106.

(Step S106) The processing unit 140 determines whether the acquisition conditions are met. If the acquisition conditions are met, the process proceeds to Step S107; otherwise, it proceeds to Step S108.

(Step S107) The processing unit 140 acquires information regarding the path. That is, the processing unit 140 performs the acquisition process for related information. This process will be described in detail below. The process then proceeds to Step S108.

(Step S108) The processing unit 140 determines whether the output conditions are met. If it is determined that the output conditions are met, the process proceeds to Step S109; otherwise, it proceeds to Step 5110.

(Step S109) The processing unit 140 acquires output information based on the related information. Then, the processing unit 140 outputs the output information. The process then proceeds to Step S110.

(Step 5110) The processing unit 140 determines whether the notification conditions are met. If it is determined that the notification conditions are met, the process proceeds to Step S111; otherwise, the process ends.

(Step Sill) The processing unit 140 constructs and outputs the output information using the related information. In this case, the processing unit 140 ensures that the output information is output in the specified notification mode. The process then ends.

Such processing is periodically repeated. The sequence of these steps is not limited thereto. For example, if output information for a flight has already been configured, it may be used for re-output or for output in a specified notification mode.

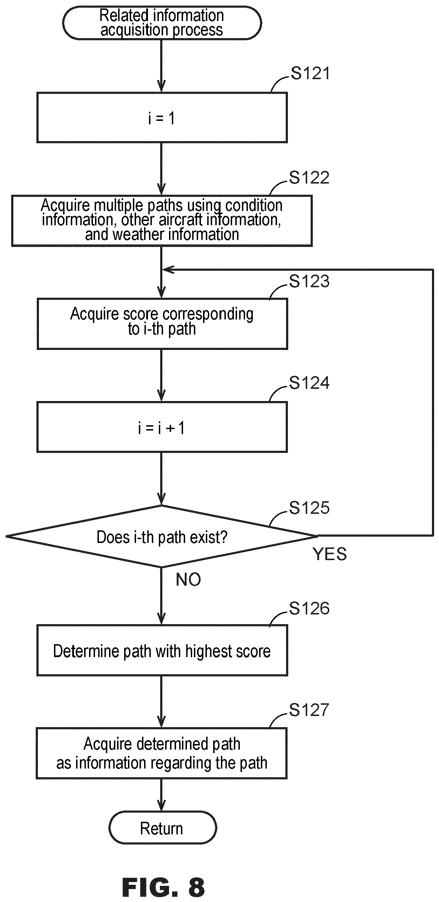

FIG. 8 is a flowchart illustrating an example of the process for acquiring related information by the information processing device 100.

The following describes an example of the process when recommended path information is acquired as related information.

(Step S121) The related information acquisition unit 151 sets the counter i to 1.

(Step S122) The related information acquisition unit 151 acquires multiple paths using condition information, other aircraft information, weather information, etc. via the path acquisition unit 153.

(Step S123) The related information acquisition unit 151 acquires the score corresponding to the i-th path via the path evaluation unit 155.

(Step S124) The related information acquisition unit 151 increments the counter i by 1.

(Step S125) The related information acquisition unit 151 determines whether the i-th path exists. If it exists, the process returns to Step S123; otherwise, it proceeds to Step S126.

(Step S126) The related information acquisition unit 151 determines the path with the highest score among the paths. In other words, the related information acquisition unit 151 acquires the path that meets the specified condition of having the highest score.

(Step S127) The related information acquisition unit 151 acquires the determined path as the recommended path information. The process then returns to the higher-level process.

### (Description of Specific Examples)

The information processing device 100 configured as above may acquire path information for the target aircraft 810 and output output information in following situations.

### (Altitude Setting Support)

The information processing device 100 can output output information for altitude optimization of the target aircraft 810 during flight. As output information in this case, recommended path information comprising altitude settings and speed information during altitude transition may be comprised.

The output of altitude setting information may be performed as follows. The related information acquisition unit 151 acquires paths, including altitude settings and speed information for altitude transition via the path acquisition unit 153. The related information acquisition unit 151 acquires recommended path information based on the scores obtained by the path evaluation unit 155 for each path. The output unit 161 outputs output information based on the acquired recommended path information.

The path acquisition unit 153 uses input information such as aircraft characteristics information, the position information history of the target aircraft 810, flight condition information of the target aircraft 810, flight information of the target aircraft 810, weather information comprising past weather information and atmospheric forecast information, location prediction information, and fuel consumption information. Using these input information and learning information, the path acquisition unit 153 acquires path information as recommended path information (information regarding trajectory). The acquired information may be output to perform calculations or make decisions against other criteria to acquire the path.

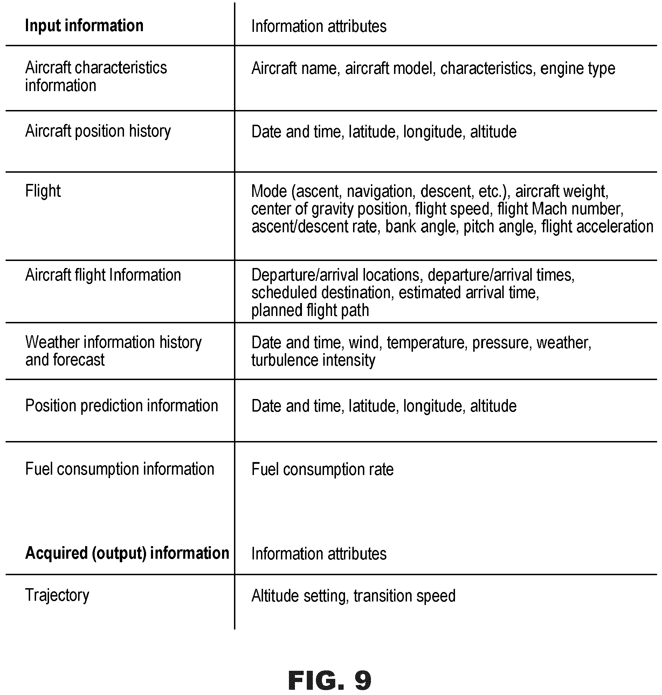

FIG. 9 is a diagram explaining a specific example of the operation of the path information acquisition unit 151 during altitude setting in the information processing device 100.

FIG. 9 shows specific examples of input information used to acquire paths during altitude setting and specific examples of acquired information. The related information acquisition unit 151 can output attribute values of the acquired information by using input information containing attribute values and prepared learning information.

As shown in the figure attribute values such as the aircraft name, aircraft model, aircraft characteristics, and engine type are used as aircraft characteristics information. Attribute values such as date, latitude, longitude, and altitude are used as the position information history of the target aircraft 810. Attribute values such as mode (climb, navigation, descent, etc.), aircraft weight, center of gravity position, flight speed, Mach number, climb/descent rate, bank angle, pitch angle, and flight acceleration are used as information regarding the flight condition of the target aircraft 810. Attribute values such as departure and arrival points, departure and arrival times, expected arrival point, expected arrival time, and planned flight path are used as flight information of the target aircraft 810. Attribute values such as date, wind, temperature, pressure, weather, and turbulence intensity are used as weather information. Attribute values such as date, latitude, longitude, altitude, and equipment are used as position forecast information. Attribute values such as fuel consumption rate are used as fuel consumption information. Attribute values such as altitude settings and transition speeds are used as path information which is the acquire information.

When recommended path information regarding altitude settings is acquired and output information is output, users can utilize the information processing device 100 with the following steps.

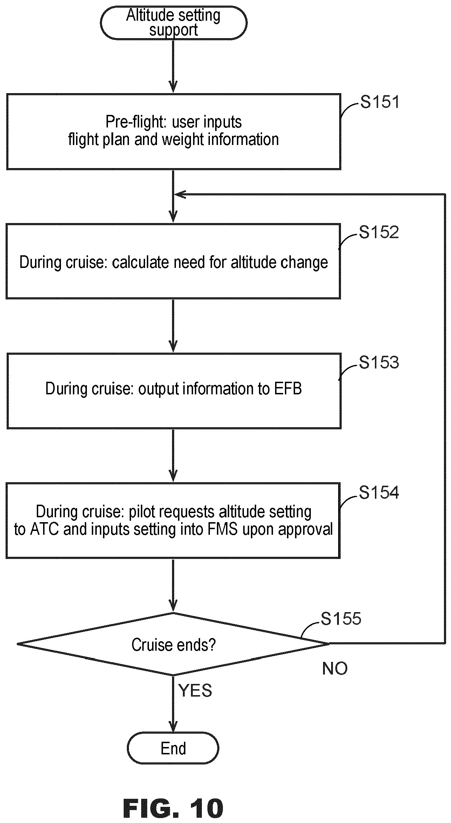

FIG. 10 is a flowchart illustrating an example of using the altitude setting support function in the information processing device 100.

(Step S151) Before flight, the user (such as a pilot or flight manager) inputs flight plan and weight information of the target aircraft 810. The own aircraft information acquisition unit 141 of the information processing device 100 acquires these inputs.

(Step S152) During cruise, using appropriately acquired information, the related information acquisition unit 151 performs the acquisition process for recommended path information for altitude settings. That is the necessity for altitude changes is calculated. Until the output conditions or notification conditions are met, output information is not output, but this is not limited thereto.

(Step S153) When the output conditions or notification conditions are met, the output information is output to the output terminal 700. Here the output information is output and displayed on an electronic flight bag that the pilot can observe.

(Step S154) The pilot confirms the content of the output information and determines whether to change the altitude. If changing the altitude, the pilot applies for altitude setting to air traffic control (ATC) and sets the altitude in the flight management system (FMS) of the target aircraft 810 upon approval.

(Step S155) During cruise, the flow from Step S152 to Step S154 is repeated. When cruise ends, the use of the altitude setting support function is completed.

Utilizing such an altitude setting support function provides specific benefits in this embodiment. For example, information regarding the cruising altitude, that allows more efficient operation of the aircraft based on the traffic volume of other aircraft 820 and 830 in flight and atmospheric forecast information, and condition information of the target aircraft 810 can be output. Conventionally, it has been difficult to grasp the best path with the actual traffic flow taken into account in cruise scenarios. In many cases, altitude adjustments during cruise were limited or performed in specified manners unless made necessary due to weather or traffic conditions. In this embodiment, users can grasp information regarding the efficient cruising altitude in real-time during flight and apply for changes to ATC in a timely manner. As a result, the target aircraft 810 can be operated more efficiently.

### (Shortcut Path Setting Support)

The information processing device 100 can output output information (Direct-to information) for flying a shortcut path by changing the course of the target aircraft 810 during flight. The output information in this case may comprise recommended path information that comprises information on the shortest path, information on the set altitude, and information on the transition speed.

The output information for flying the shortest path may be output as follows. The related information acquisition unit 151 acquires paths that comprise information on the shortest path, information on the set altitude, and information on the transition speed, by the path acquisition unit 153. Then, the related information acquisition unit 151 acquires recommended path information based on the score acquired by the path evaluation unit 155 for each path. The output unit 161 outputs output information based on the acquired recommended path information.

The path acquisition unit 153 may use input information such as aircraft characteristics information, position information history of the target aircraft 810, flight information of the target aircraft 810, flight condition information of the target aircraft 810, weather information comprising past weather information and atmospheric forecast information, location prediction information, and fuel consumption information. Using these input information and prepared learning information, the path acquisition unit 153 acquires path information as acquisition information. The acquired information may be output to perform calculations or make decisions against other criteria to acquire the path.

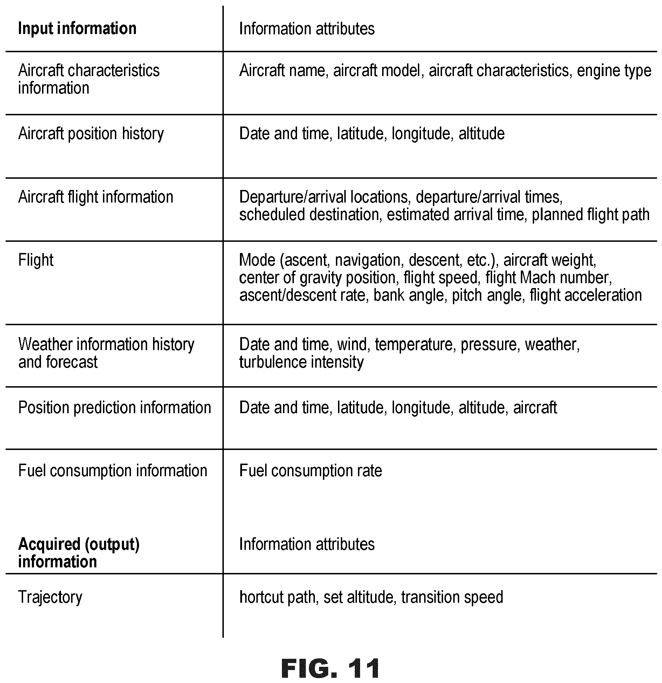

FIG. 11 illustrates a specific example of how the related information acquisition unit 151 operates when the shortcut path is set in the information processing device 100.

FIG. 11 shows specific examples of input information used to acquire candidates for flying a shortcut path and specific examples of acquired information. By using input information containing attribute values and learning information, the related information acquisition unit 151 can output attribute values of the acquired information.

As shown in the figure, attribute values of aircraft characteristics information may comprise aircraft name, model, aircraft characteristics, and engine type. Attribute values such as departure and arrival locations, departure and arrival times, estimated arrival location, estimated arrival time, and planned flight path are used as flight information of the target aircraft 810. Attribute values such as date and time, latitude, longitude, and altitude are used as position information history of the target aircraft 810. Attribute values such as mode (climb, cruise, descent, etc.), aircraft weight, center of gravity position, flight speed, flight Mach number, climb/descent speed, bank angle, pitch angle, flight acceleration, etc. are used as flight condition information of the target aircraft 810. Attribute values such as date and time, wind, temperature, pressure, weather, turbulence intensity, etc. are used as weather information. Attribute values such as date and time, latitude, longitude, altitude, and aircraft are used as location prediction information. Attribute values such as fuel consumption rate is used as fuel consumption information. Attribute values such as shortcut path, set altitude, and transition speed are used as candidate information which is acquired information.

The path acquisition unit 153 may be configured to acquire a path including a shortcut path using various path search algorithms, etc., taking into account the waypoint structure of each segment to the destination, the airway structure, the controlled airspace, the restricted area, the passage fee such as the airspace facility usage fee, the traffic flow (the position and the location prediction information of other aircraft 820 and 830, etc.) and the past flight record, based on the flight information of the target aircraft 810. The related information acquisition unit 151 may specify candidates for points where a Direct-to application (path shortcut application) may be made based on the acquired path, and output the information to the user. Here, the related information acquisition unit 151 may be configured to recommend a shortcut path that may be efficiently flown by utilizing a tailwind, recommend a shortcut path that is less likely to encounter turbulence, and acquire information on points suitable for a path shortcut application to fly a shortcut path as related information, based on the weather information.

When recommended path information for flying a shortcut path is acquired and output information is output in this way, the user can utilize the information processing device 100 with the following steps.

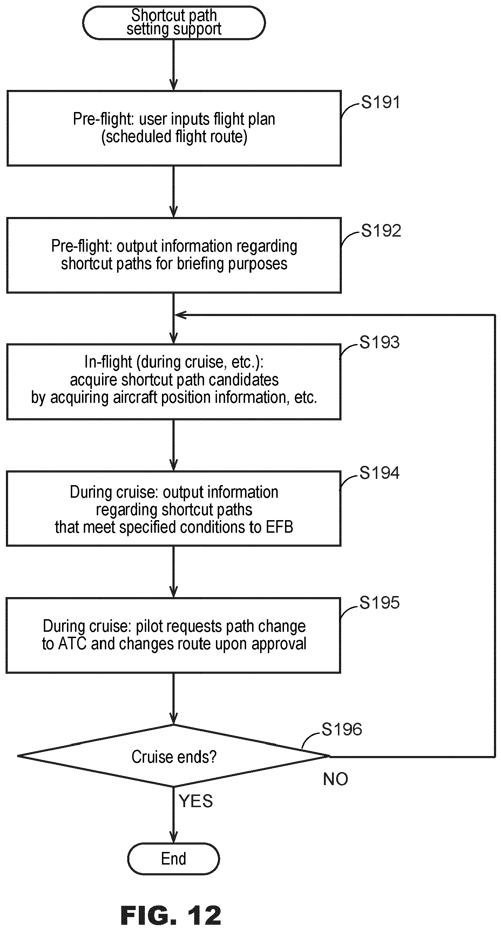

FIG. 12 is a flowchart illustrating an example of using the shortcut path setting support function in the information processing device 100.

(Step S191) Before flight, the user inputs the flight plan of the target aircraft 810. The own aircraft information acquisition unit 141 of the information processing device 100 acquires the input information.

(Step S192) Before flight, the information processing device 100 outputs output information regarding the shortcut path to output terminal 700, used by the flight manager, etc., using the input information and other acquired information. The flight manager and the pilot of the target aircraft 810 can utilize the output information for briefing. For example, the output information may be issued and carried as an expected amendment report before flight. The output information may indicate the timing and location for changing the course on a map or as text information showing the combination of waypoints and airways.

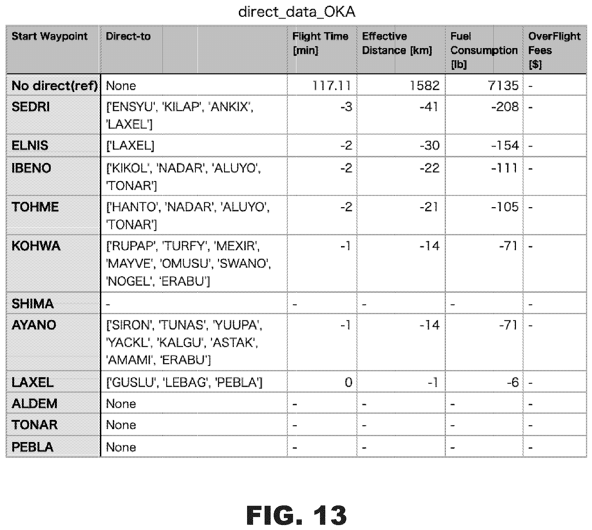

FIG. 13 is a diagram illustrating an example of output information regarding a shortcut path in the information processing device 100.

In the figure, an example of output information listed in a table format is shown. In this output information, for each of shortcut paths that are begin considered for the flight, the starting waypoint and waypoints to be passed through are indicated by text. For each shortcut path, the values for each factor, such as flight time, flight distance, fuel consumption, and passage fees are shown as the difference from when flying the original path. The user can use such output information to consider flying the shortcut path.

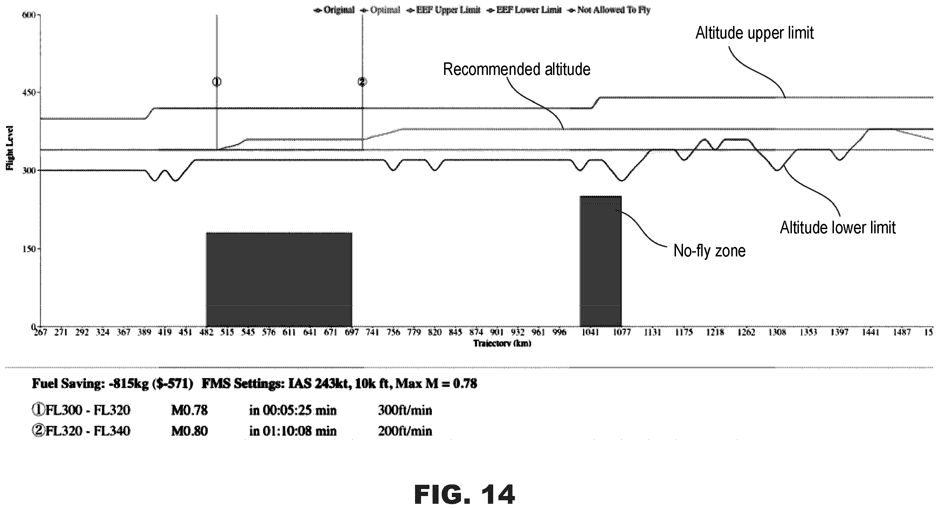

FIG. 14 is a diagram illustrating an example of output information regarding a shortcut path in the information processing device 100.

In the figure, an example of output information indicating altitude information for the recommended path is shown. In this output information, the horizontal axis represents the distance from the departure point, and the vertical axis represents altitude, showing the transition of the altitude to be flown. It also indicates the no-fly zones, the upper and lower limits of permitted altitudes. Using such output information, the user can easily observe at what altitude they should fly.

Returning to FIG. 12.

(Step S193) During flight, particularly during cruise, the information processing device 100 acquires position information, etc. of the target aircraft 810. The related information acquisition unit 151 repeatedly acquires candidates for shortcut paths and determines whether specified conditions are met.

(Step S194) When the related information acquisition unit 151 acquires a shortcut path that meets the specified conditions during cruise, the information processing device 100 outputs output information regarding the shortcut path to the output terminal 700. Here the output information is output and displayed on an electronic flight bag that the pilot can observe.

(Step S195) The pilot observes the content of the output information and decides whether to change the course. If changing the course, the pilot applies for a Direct-to (path shortcut) to ATC and changes the path of the target aircraft 810 upon approval.

(Step S196) During cruise, the flow from Step S193 to Step S195 is repeated. When cruise ends, the use of the shortcut path setting support function is completed.

Utilizing such a shortcut path setting support function provides specific benefits in this embodiment. Applying for flying a shortcut path when possible becomes easier, allowing the efficient operation of the target aircraft 810. Conventionally, although applying for flying a shortcut path depending on traffic flow and weather conditions has always been possible, doing so by taking into account various factors largely relied on the individual experience of the user. Flying a shortcut path based on the user's experience did not necessarily lead to cost reductions in terms of fuel consumption and flight time. Using the information processing device 100, output information is provided when flying a shortcut path is feasible and efficient taking into account the condition of own aircraft, other aircraft, and weather, making it easier for users such as pilots to apply for flying appropriate shortcut paths.

There are points along the aircraft's path where applying for flying a shortcut path is likely to be approved. In this embodiment, using information regarding past flight paths of aircraft and past traffic flow information to generate learning information or analyzing this information to set specified conditions can recommend flying a shortcut path at points or situations where application is more likely to be approved. The information processing device 100 can output useful information for flying a shortcut path effectively utilizing weather conditions, taking into account the traffic flow in each area and the characteristics of ATC. As a result, it becomes even easier for the user to fly a shortcut path.

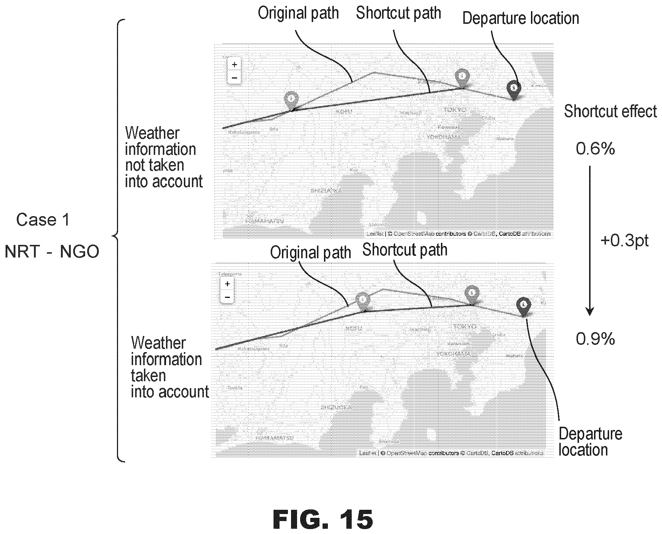

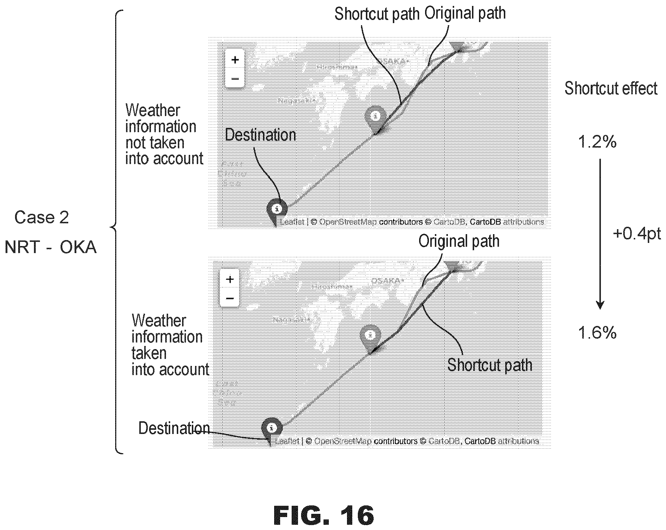

FIG. 15 is a first diagram illustrating the results of using the shortcut path in the information processing device 100. FIG. 16 is a second diagram illustrating the results of using the shortcut path in the information processing device 100.

In each figure, for the same path, the case where the shortcut path is proposed without weather information taken into account (top), and the case where the shortcut path is proposed with weather information taken into account to reduce fuel consumption (bottom) are shown. In either case, it can be observed that flying the shortcut path with weather information taken into account results in greater fuel savings from flying the shortcut path.

The output information regarding the shortcut path preferably comprises not only the two-dimensional path (longitude, latitude, etc.) but also the flight trajectory including altitude and speed. The pilot can preferably observe weather conditions such as sway/shake forecasts and wind distribution along the flight path. This allows for more information to be obtained regarding the flight path conditions that were not initially anticipated, increasing foresight. When acquiring the shortcut path, changes in aircraft weight during navigation are preferably taken into account as described above.

### (Turbulence Avoidance)

The information processing device 100 can output information for displaying the path of the target aircraft 810 overlapped with the acquired results of turbulence intensity or the predicted results of turbulence intensity. The output information may be configured using information on wind shear, which is typically used in weather forecasts. The output information may also be configured by taking into account other turbulence generating factors such as mountain waves. In this case, the output information may be displayed on output terminals 700 used for pre-flight briefings, displayed on output terminals 700 as electronic flight bags, or printed out for use.

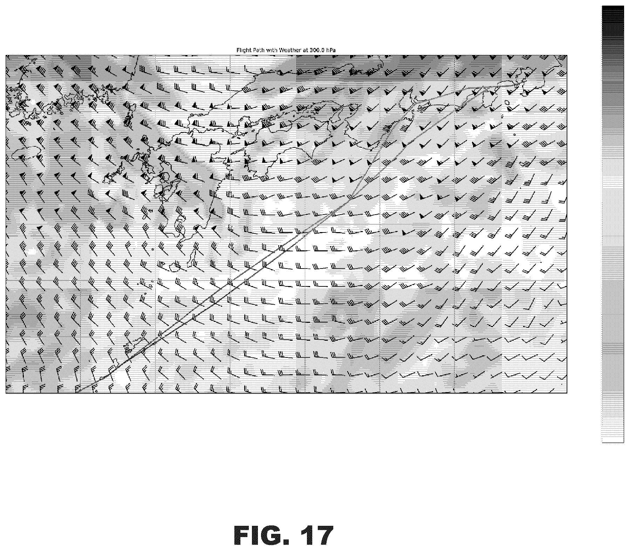

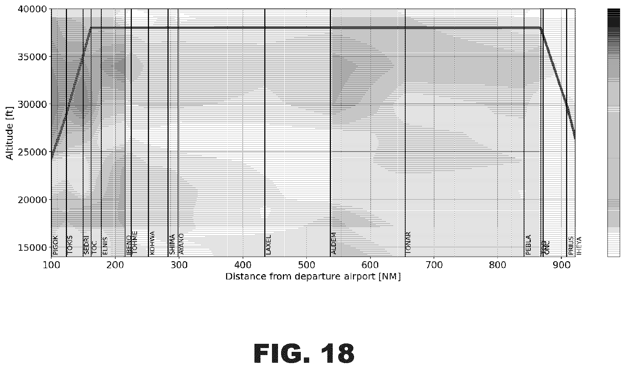

FIG. 17 is a first diagram illustrating an example of output information regarding turbulence intensity in the information processing device 100. FIG. 18 is a second diagram illustrating an example of output information regarding turbulence intensity in the information processing device 100.

In FIG. 17, the current path of the target aircraft 810 and the recommended path are shown on a map. The map also shows the predicted results of turbulence intensity as a heat map and the wind strength at each location as symbols.

In FIG. 18, the horizontal axis represents the distance from the departure point, and the vertical axis represents altitude, showing the transition of the altitude to be flown by the target aircraft 810 along with the position of waypoints. The predicted results of turbulence intensity are also shown as a heat map in the figure.

The user can easily observe the relationship between the path of the target aircraft 810 and the predicted results of turbulence intensity, etc. using such output information.

Information on whether the aircraft flew stably or not is useful information for the aircraft's flight. For example, such information can be used to predict whether stable flight is possible, which is important for the operation of the aircraft.

For example, if strong sway/shake is experienced during flight, it indicates that there may be factors such as turbulence affecting stable flight at that location. When an aircraft encounters turbulence during flight, it may experience sway/shake or need to correct its attitude, causing discomfort to passengers. If areas where turbulence may be occurring can be identified beforehand, the possibility of flight stability for subsequent aircraft is likely to increase by taking a path that avoids those areas.

Until now, turbulence forecasts have been conducted using discrete historical reports called PIREPs and simple turbulence prediction indicators that evaluate only the wind speed difference in the vertical direction, but the low accuracy in forecasting future situations has been an issue. When encountering turbulence at locations different from the forecast or when the turbulence intensity differs from the forecast, it becomes necessary to consider or execute path changes such as altitude changes at that point. Such path changes depend on the individual judgment of the pilot on the spot, resulting in unclear effects of the path changes and potentially inefficient flights.

In contrast, in this embodiment, turbulence occurrence with high accuracy can be predicted beforehand for flying appropriate paths that match the operational conditions of each aircraft based on specified information for prioritizing factors. Therefore, dependence on the individual judgment of pilots in selecting turbulence avoidance measures can be reduced, making efficient flight easier.

In this embodiment, information predicting the sway/shake intensity that may be caused by turbulence can be acquired and comprised in the output information. Considering that the impact of air currents on sway/shake and the operating conditions of actuators vary by aircraft type or size group, information predicting the sway/shake intensity is preferably acquired for each aircraft type or size group. For example, it can be acquired by the path evaluation unit 155. That is, using operational record data called QAR data as training data, information using learning information configured with appropriate mix ratios of various diagnostic quantities (turbulence elements) by altitude for each aircraft type or size group can be acquired. Information regarding the sway/shake intensity experienced by the passenger when flying in that airspace may also be predicted and obtained from the turbulence intensity using learning information configured with training data that matches the turbulence intensity, which is weather information, with the intensity of sway/shake experienced by the passenger when flying in that airspace. The training data can be created by extracting the vibrational components of vertical acceleration from the output of acceleration sensors or other inertial sensors using a high-pass filter, but it is not limited thereto.

By outputting information on the likelihood of sway/shake based on predictions with the wide coverage of various turbulence elements for each aircraft type, predicting the sway/shake intensity with higher accuracy becomes possible. Depending on the operational conditions of each aircraft, such as what level of sway/shake is acceptable, efficient flight can be performed.

The figure shows an example of output information indicating altitude information for the recommended path. In this output information, the horizontal axis represents the distance from the departure point, and the vertical axis represents altitude, showing the transition of the altitude to be flown. It also indicates the no-fly zones, the upper and lower limits of permitted altitudes. The user can easily observe the altitude to be flown using such output information.

### (User Interface)

The following user interface may be used for setting shortcut paths, observing weather conditions, and acquiring other recommended path information.

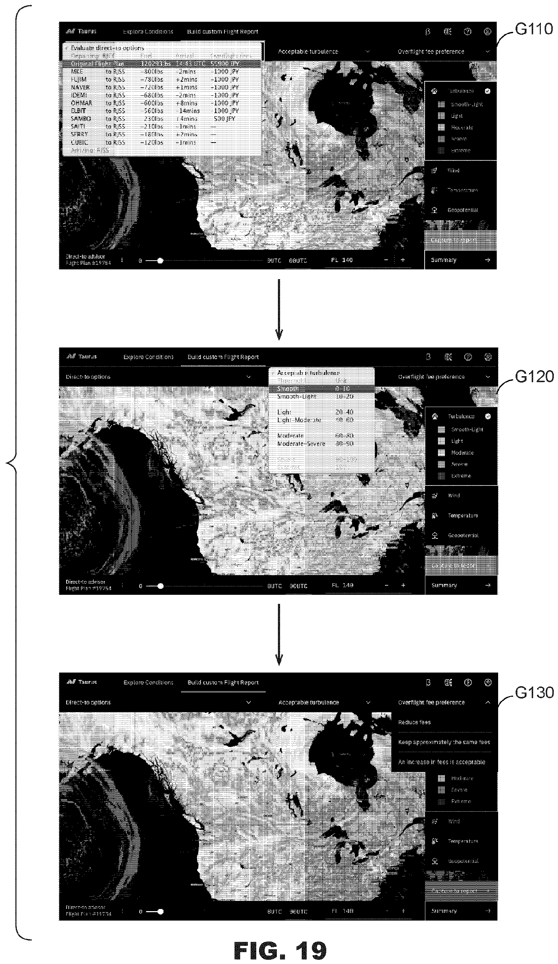

FIG. 19 is a diagram illustrating an example of the user interface for selecting recommended paths provided by the information processing device 100.

The figure shows the display content of the display screen of the output terminal 700 for setting a shortcut path (Step G110). The display screen shows information on turbulence intensity as a heat map on the map as the weather conditions in the airspace to be flown by the target aircraft 810. It may be configured to display other information such as wind strength, air temperature, and pressure. This weather information is configured to allow the time-series changes to be displayed. The transition of previous weather information based on past weather information may be displayed, or the predicted results of the transition of future weather information based on atmospheric forecast information may be displayed.

The display screen can display candidates for shortcut paths. For each shortcut path, the waypoint name for the shortcut, fuel consumption, flight time, and passage fees are shown as differences from the original flight plan. The user can select the desired shortcut path by considering such information. The candidates for shortcut paths may be displayed in a way that only the most recommended ones are shown. Alternatively, as shown in the figure, candidates for two or more paths may be displayed. Here, the candidates for two or more paths may be sorted or limited based on the values of the factors specified by the user, such as fuel consumption, flight time, and passage fees. In other words, the candidates for paths to be prioritized for display may change according to the specified information. The specified information may be input by accepting operations to select specified factors (attributes) on the display screen. The priority of each factor may also be specified intuitively using radar charts with axes for each factor or slide bars that allow individual setting of the priority of each factor.

The display screen comprises an interface for inputting the operational environment prerequisites of the target aircraft 810. For example, the tolerable turbulence intensity (acceptable sway/shake magnitude) and the tolerable passage fees for changing the path can be input. When the user operates to specify the tolerable turbulence intensity, a candidate selection screen is displayed (Step G120). On the candidate selection screen, options for the tolerable turbulence intensity are shown. The user can easily select the tolerable turbulence intensity by selecting an option. When the user operates to specify the rule regarding tolerable passage fees, a policy selection screen for specifying the rule regarding passage fees is displayed (Step S130). The user can select the rule to be adopted from options such as "reduce passage fees," "allow the same level of passage fees," or "allow an increase in passage fees."

Such a user interface may be used on output terminals 700 for pre-flight briefings or electronic flight bags, making it easy and intuitive for pilots and dispatchers to utilize the functions of the information processing device 100.

### (Traffic Flow and Congestion Information Visualization Tool)

The information processing device 100 can output information containing the path of the target aircraft 810 and location prediction information of surrounding other aircraft 820 and 830. The output information may be information indicating the positions of each aircraft on the same map in a time series, but it is not limited thereto. The map itself does not necessarily need to be displayed. The output information may be displayed on output terminals 700 used for pre-flight briefings, displayed on output terminals 700 as electronic flight bags, or printed out for use.

Such output information may be configured to show the future positions of surrounding other aircraft 820 and 830 using frames indicating areas with high probability of presence. The positions of each aircraft may be displayed using aircraft icons. This makes it easy to observe the positional relationship between the target aircraft 810 itself and other aircraft 820 and 830. Information such as the type of aircraft, flight number, altitude, departure, and arrival locations is preferably added for each aircraft.

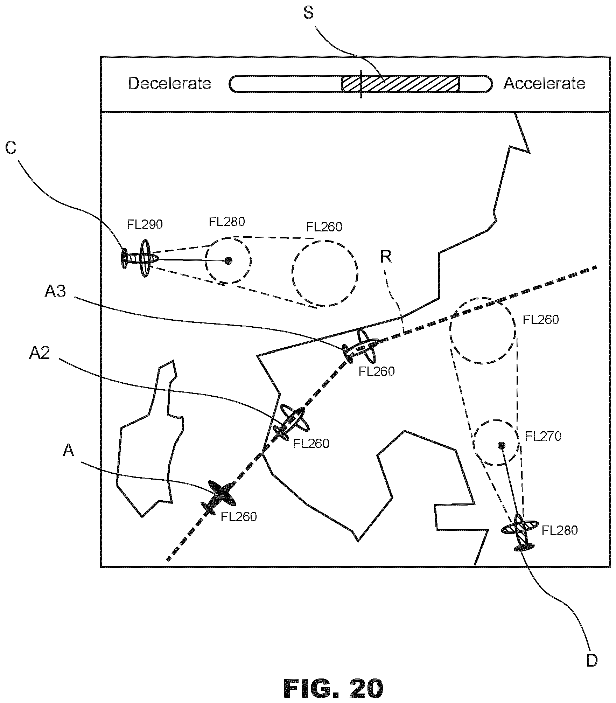

FIG. 20 is a diagram illustrating an example of the traffic flow visualization screen provided by the information processing device 100.

In the visualization screen shown in the figure, the icon A represents the target aircraft 810, and icons C and D represent other aircraft 820 and 830 on the map. For the target aircraft 810, the current path R, the icon A2 indicating the position after a first specified time has elapsed, and the icon A3 indicating the position after a second specified time has elapsed are shown together. For each of the aircraft represented by icon C and icon D, the line segments indicate the current direction and speed, and the forecast circles indicating the predicted positions after the first and second times have elapsed are shown. The forecast circle may also be referred to as an area indicating the predicted range of positions after a specified time. The current altitude of each aircraft and the altitude of the positions after the first time has elapsed and their forecast circles are indicated by text. Using the traffic flow visualization screen, the user can easily grasp the current positional relationship between the target aircraft 810 and other aircraft 820 and 830, as well as the predicted results of the future positional relationship of each aircraft.

Here, the visualization screen comprises a pace display bar S indicating information regarding the pace of the target aircraft 810. The pace display bar S indicates whether the current pace of the target aircraft 810 is faster than the ideal pace based on the recommended path of the target aircraft 810 and the current target aircraft 810. That is, if flying faster than planned or if the current pace will likely result in receiving vectoring or holding instructions because the destination is congested, it indicates that the pace is fast. In this case, it may indicate the need to fly at a slower pace. Conversely, if flying later than scheduled or if arriving later will result in a congested destination, it indicates that the pace is slow. In this case, it may indicate the need to fly at a faster pace (increase speed from the current pace). In the figure, an example where the pace information indicating the need to fly at a faster pace is displayed as the pace display bar S is shown, but the display mode of the pace information is not limited thereto. For example, pace information may be displayed using text or other types of indicators. The user can easily observe whether they are flying at the appropriate pace and whether they need to change the pace using such pace information.

The pace information may also comprise information indicating whether there is a high possibility of receiving vectoring or holding instructions if continuing to fly at the current pace. It may also indicate interference with the path of other aircraft 820 and 830, and display this information using text or shapes. Operations to output information regarding recommended paths may also be received on the visualization screen. Further, the visualization screen may be displayed using the user interface mentioned above.

The information processing device 100 can output information based on congestion information for the destination of the target aircraft 810. The output information may use the congestion information acquired as described above to show the congestion level of the destination by time period. The output information may be displayed on output terminals 700 used for pre-flight briefings, displayed on output terminals 700 as electronic flight bags, or printed out for use.

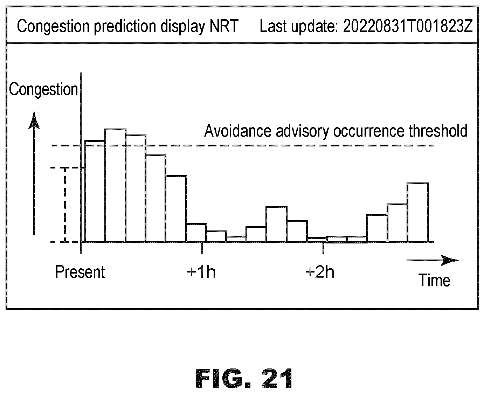

FIG. 21 is a diagram illustrating an example of output information based on congestion information provided by the information processing device 100.

The figure shows output information based on congestion information indicating the predicted congestion level in the near future for a destination. The output information is shown as a graph with congestion level on the vertical axis and time on the horizontal axis, indicating the congestion level for each time period (e.g., every 10 minutes). The output information may be updated as appropriate, but it is not necessary. The example shown in the figure reflects the predicted results of congestion levels based on traffic flow information regarding the destination. The congestion level for each time period may be displayed in a manner that allows comparison with past statistical values. Whether the current condition is above or below the trend can be visualized.

The example shown in the figure also displays the congestion level threshold that serves as a guide for when avoidance instructions such as vectoring and holding may be issued. This threshold display may be performed by the processing unit 140 based on past conditions. The user can determine whether the congestion level is likely to result in vectoring or holding instructions by referring to the threshold.

The output information may comprise information visualizing both the current situation and the predicted future congestion levels, as well as information for avoiding congestion for the target aircraft 810. Information for avoiding congestion may be displayed based on recommended path information and congestion information for the target aircraft 810. Information for avoiding congestion may comprise the need for active acceleration or deceleration, or the need for altitude adjustments. It may also comprise the need for active adjustment of departure times to avoid congestion.

Generally, pilots try to make adjustments to maneuver the aircraft in a way that is the most advantageous for the aircraft while assuming the possibility of air traffic control instructions. Although the aircraft's radar and ADS-B can observe aircraft ahead, it is difficult to identify aircraft intersecting from other directions. Conventionally, it has been challenging for each aircraft to fully grasp the status of surrounding aircraft, leading to instances where aircraft would rush to secure an earlier landing slot, even without a clear need. Similarly, ground operations management has faced difficulties predicting the timing and extent of delays, often resorting to ad-hoc responses once congestion occurs.

In contrast, this embodiment allows for accurate understanding and prediction of traffic flow around the target aircraft 810. Thus, descending at appropriate times based on recommended path information tailored to the aircraft's condition and voluntarily adjusting spacing with other aircraft 820 and 830 become possible. By accurately predicting future traffic flow around the destination and its congestion status, planning and mitigating for delays also become possible. As a result, this enables the stable and planned operation of many aircraft.

### (Summary)

As described above, according to this embodiment, since the output information is based on information regarding the path of the aircraft, it can be utilized to fly the aircraft. The acquired information regarding the path meets specific conditions, enabling an efficient flight of the aircraft. In other words, since the acquired information regarding the path meets specific conditions, the aircraft can be flown to achieve desired goals.

In this embodiment, since information regarding the path is obtained using weather information, the output information can be utilized to efficiently fly the aircraft even if atmospheric conditions change. The weather information may comprise atmospheric prediction information which is predicted using atmospheric measurement information measured by preceding aircraft. By using more accurate atmospheric prediction information to acquire information regarding the path, the output information can be utilized to efficiently fly the aircraft.

Fuel consumption information and location prediction information are used to acquire information regarding the path. Therefore, more reliable output information to efficiently fly the aircraft can be output. By acquiring information regarding the path with high real-time accuracy based on information regarding the target aircraft and other aircraft under the latest conditions, as well as the latest weather information, more reliable output information to efficiently fly the aircraft can be output.

In this embodiment, airspace information is used to acquire information regarding the path. Therefore, output information regarding the actual flight path can be provided. Even areas, where deviations from the normal standard paths are permitted, are limited, output information that addresses this can be provided.

The output unit 161 can output information based on congestion information. Using such output information reduces the loss of time caused by congestion at the destination and allows efficient flight and smooth arrival at the destination to be aimed for.

The output unit 161 can output information using disturbance information. Such output information is useful for subsequent aircraft in increasing the possibility of flying while avoiding sway/shake. The output unit 161 can also use the disturbance information acquired from multiple aircraft as the target aircraft 810 to output information that is useful for flying an aircraft. Such output information is useful in increasing the possibility of flying while avoiding sway/shake.

As output information, information that shows the path of each aircraft on a map along with the transition of disturbance information can be output. Therefore, information useful for the flight of an aircraft can be output in a format that allows pilots and flight managers to easily grasp disturbance information that may affect the path of each aircraft.

The processes in this embodiment may be implemented by software. This software may be distributed via software downloads. This software may also be recorded on a recording medium such as an optical disk for distribution. The software that implements the information processing device 100 in this embodiment is a program, executed on the computer of the information processing device 100, directs the computer to function as: an own aircraft information acquisition unit for acquiring condition information regarding the target aircraft; a path acquisition unit for acquiring paths that the target aircraft may follow; a related information acquisition unit for acquiring information regarding the path based on condition information; and an output unit for outputting information based on related information.

### (Description of Variants)

In the embodiment described above, other processes may be performed using disturbance information. For example, the processing of obtaining the recommended path information described above may be performed using two or more pieces of disturbance information and corresponding location information. This may comprise assistance in setting altitudes, continuous ascent, continuous descent, and shortcut path settings.

For example, the path acquisition unit 153 may use output information regarding disturbance information when acquiring candidate paths. In other words, the path acquisition unit 153 may acquire candidate paths based on output information regarding disturbance information. For example, output information regarding disturbance information may comprise information on the sway/shake intensity in each specified area during a specified time period. If the sway/shake intensity in the area where the candidate path is comprised exceeds a threshold during the specified time period (e.g., a time period including the scheduled transit time), that path is excluded from the candidates. This prevents the acquisition of recommended path information for paths that may experience significant sway/shake.

The path evaluation unit 155 may use output information regarding disturbance information when acquiring scores for candidate paths. In other words, the path evaluation unit 155 may acquire path scores based on output information regarding disturbance information. For example, output information regarding disturbance information may comprise information on the sway/shake intensity in each specified area during a specified time period. The score for the path is then obtained based on the sway/shake intensity in the area during the specified time period. This allows the acquisition of scores for each path according to the possibility of sway/shake.

In the embodiment described above, learning information for obtaining prediction information on the sway/shake intensity at each point on the aircraft's path may also be configured using disturbance information (which may be output information regarding disturbance information). Prediction information on the aircraft's path regarding inertia may then be obtained using this learning information. In this case, weather information is preferably comprised as input information in the learning information. The following describes the configuration of an information processing device 1100 according to a variant of this embodiment.

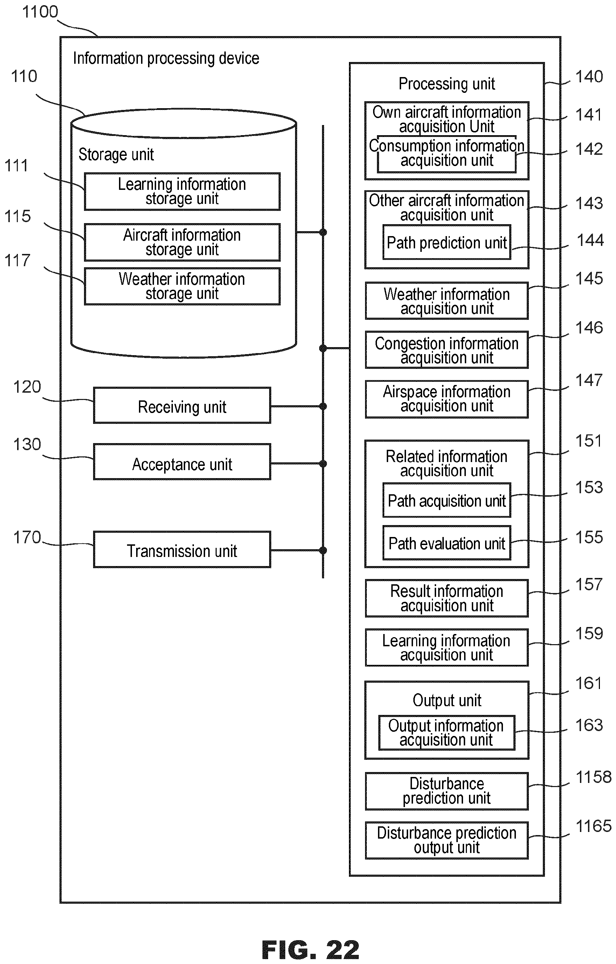

FIG. 22 is a block diagram of the information processing device 1100 according to a variant of this embodiment.

The information processing device 1100 differs from the information processing device 100 in the following points. In the information processing device 1100, the processing unit 140 further comprises a disturbance prediction unit (an example of the prediction information acquisition unit) 1158 and a disturbance prediction output unit (an example of the prediction information output unit) 1165.

In this variant, the learning information acquisition unit 159 generates learning information regarding disturbance prediction of aircraft using machine learning methods. The use of machine learning methods may be executed as described above. In other words, two or more sets of training data on past flights of each aircraft can be used. The training data may comprise weather information regarding the flight, condition information of the aircraft that performed the flight, and information on the sway/shake intensity at each point during flight based on disturbance information. For example, the learning information acquisition unit 159 comprises weather information and condition information at each point of the path for each flight as learning input information, and uses multiple training data sets that comprise information on the sway/shake intensity at each point of the path for the flight (disturbance information) as learning output information to acquire learning information using machine learning methods. In other words, the learning information acquisition unit 159 acquires learning information using two or more sets of training data, each including learning input information comprising weather information and condition information regarding the flight of an aircraft and learning output information comprising disturbance information at each point on the path of the flight. The weather information preferably comprises turbulence intensity.

The disturbance prediction unit 1158 applies the learning information configured as described above to weather information that corresponds to each point on the path of the target aircraft 810, obtained by the weather information acquisition unit 145, and condition information regarding the target aircraft 810, as input information. This allows the disturbance prediction unit 1158 to obtain disturbance prediction information on the sway/shake intensity at each point on the path of the target aircraft 810. Disturbance prediction information may be referred to as prediction information regarding inertia. Disturbance prediction information may also be referred to as information resulting from predicting disturbance information. The path may be the path regarding recommended path information. In other words, the path here may be referred to as the path that the target aircraft 810 is scheduled to follow. Disturbance prediction information is information that corresponds to information regarding the path, i.e., information regarding position.

The disturbance prediction output unit 1165 outputs prediction output information based on the disturbance prediction information. The disturbance prediction output unit 1165 may be interpreted as a part of the output unit 161. The prediction output information may be output when specified output conditions are met or otherwise.

In this embodiment, prediction output information may be the disturbance prediction information itself, but it is not limited thereto. For example, prediction output information may comprise the maximum or average sway/shake intensity expected to occur over a specified period or section of the path based on the disturbance prediction information.

Prediction output information may be output alone or together with output information based on recommended path information. For example, users such as pilots and flight managers can observe the information on the aircraft's path based on the prediction output information with the disturbance prediction information taken into account. Such prediction output information is useful for increasing the possibility of flying while avoiding sway/shake.

Prediction output information may be used to obtain path scores by the path evaluation unit 155. In this case, prediction output information may be acquired by obtaining disturbance prediction information regarding the candidate path by using input information regarding each point of the candidate path. The related information acquisition unit 151 may be configured to obtain related information regarding the target aircraft 810's path by determining whether the acquired prediction information, i.e., prediction output information meets the recommended conditions for the target aircraft 810's path. The recommended conditions may comprise minimal disturbance. For example, the path acquisition unit 153 may acquire two or more paths that the target aircraft 810 may follow, and the related information acquisition unit 151 may determine whether each path meets the recommended conditions based on the prediction output information for each path and obtain recommended path information for the target aircraft 810 based on the determination results. This allows for the path with minimal disturbance to be output as recommended path information.

Condition information may not be used as input information to configure learning information or obtain disturbance prediction information.

(N.B.)

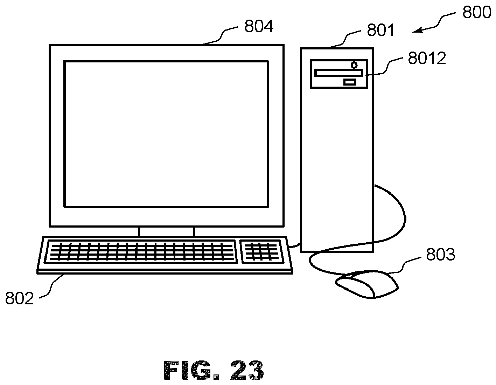

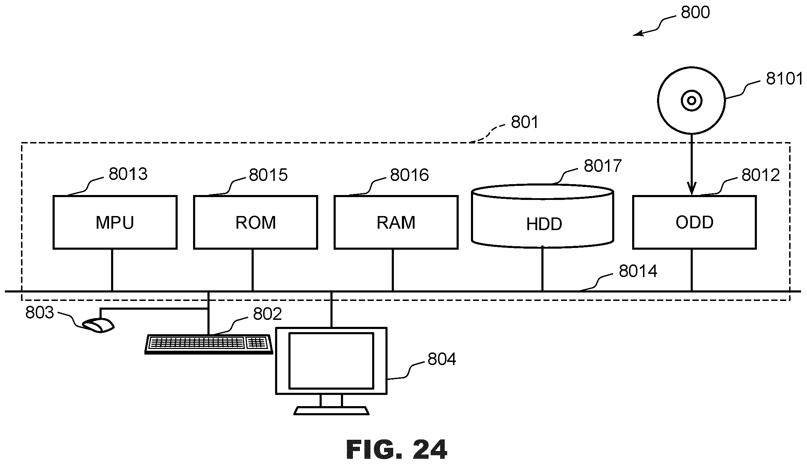

FIG. 23 is an overview diagram of the computer system 800 in the above embodiment. FIG. 24 is a block diagram of the computer system 800.

These figures show the configuration of a computer that realizes the information processing device, etc. described in the above embodiment by executing the program described in this specification. The above embodiment can be realized by computer hardware and the computer program executed thereon.

The computer system 800 comprises a computer 801 with an optical disk drive, a keyboard 802, a mouse 803, and a monitor 804.

In addition to the optical disk drive (ODD) 8012, the computer 801 comprises an MPU 8013 connected to a bus 8014, a ROM 8015 for storing programs such as a boot-up program, a RAM 8016 for temporarily storing application program instructions and providing temporary storage space, and a hard disk (HDD) 8017 for storing application programs, system programs, and data. Although not shown here, the computer 801 may also comprise a network card for providing a connection to a LAN.

The program for executing the functions of the information processing device in the above embodiment on the computer system 800 may be stored on an optical disk 8101, inserted into the optical disk drive 8012, and further transferred to the hard disk 8017. Alternatively, the program may be transmitted to the computer 801 via a network (not shown) and stored on the hard disk 8017. The program is loaded into the RAM 8016 during execution. The program may also be loaded directly from the optical disk 8101 or the network.

The program may not necessarily comprise the operating system (OS) that makes the computer 801 execute the functions of the information processing device in the above embodiment or third-party programs. The program may comprise only the necessary parts of the instructions that call the appropriate functions (modules) in a controlled manner to achieve the desired result. How the computer system 800 operates is well-known is not described in detail.

In the above program, the transmitting step that transmits information and the receiving step that receives information do not comprise processing performed by hardware, such as processing performed by a modem or interface card in the transmitting step (processing that can only be performed by hardware).

The computer executing the above program may be a single computer or multiple computers. In other words, it may perform centralized processing or distributed processing.

In the above embodiment, two or more components existing in one device may also be physically realized in one medium.

In the above embodiments, each process (each function) may be realized by centralized processing by a single device (system), or may be realized by distributed processing by multiple devices (in this case, the entire system composed of multiple devices performing distributed processing can be considered as a single "device").

In the above embodiment, the transfer of information between each component may be performed by one component outputting information and the other component receiving the information if the two components transferring the information are physically different, or if the two components transferring the information are physically the same, the information transfer may be performed by transitioning from the processing phase corresponding to one component to the processing phase corresponding to the other component.

In the above embodiment, information regarding the processing performed by each component, such as information accepted, acquired, selected, generated, transmitted, or received by each component, and information such as thresholds, formulas, and addresses used by each component in processing, may be stored, either temporarily or long-term, in a recording medium (not shown) even if not specified in the above description. Each component or a storage unit (not shown) may also store information in the recording medium (not shown). Each component or a reading unit (not shown) may also read information from the recording medium (not shown).

In the above embodiment, if the information used by each component, such as the thresholds, addresses, and various setting values which each component uses for processing, can be changed by the user, the user may or may not be allowed to change the information as needed, even if not specified in the above description. If the information can be changed by the user, the change may be realized by a reception unit (not shown) that receives a change instruction from the user, and a change unit (not shown) that changes the information in response to the change instruction. The reception unit (not shown) may receive the change instruction from an input device, may receive information transmitted via a communication line, or may receive information read from a specified recording medium.

The present invention is not limited to the embodiment described above, and various modifications are possible, which are also comprised within the scope of the present invention.

Some of the components and functions of the embodiments described above may be omitted. When acquiring information regarding paths, weather forecast information, location prediction information, fuel consumption information, and disturbance prediction information, information other than the information mentioned above may be used, or some of the above information may not be used.

Various information obtained by the information processing device 100 for outputting information regarding the target aircraft's path in the above embodiment and its variations can be utilized for other purposes. For example, an information storage device may be configured to store information obtained by the information processing device 100 and provide the stored information for other aircraft operations or other uses. Using such a device can provide useful information to others. For example, location prediction information obtained by the other aircraft information acquisition unit 143, atmospheric prediction information obtained by the weather information acquisition unit 145, and output information regarding disturbance information may be output to other devices.

### [Industrial Applicability]

As described above, the information processing device according to the present invention has an effect of being able to output information useful for flying an aircraft, and is useful as an information processing device, etc.

### [Description of Symbols]

1. OPERATION SUPPORT SYSTEM
100, 1100. INFORMATION PROCESSING DEVICE
110. STORAGE UNIT
111. LEARNING INFORMATION STORAGE UNIT
115. AIRCRAFT INFORMATION STORAGE UNIT
117. WEATHER INFORMATION STORAGE UNIT
120. RECEIVING UNIT
130. ACCEPTANCE UNIT
140. PROCESSING UNIT
141. OWN AIRCRAFT INFORMATION ACQUISITION UNIT
142. CONSUMPTION INFORMATION ACQUISITION UNIT
143. OTHER AIRCRAFT INFORMATION ACQUISITION UNIT
144. PATH PREDICTION UNIT
145. WEATHER INFORMATION ACQUISITION UNIT
146. CONGESTION INFORMATION ACQUISITION UNIT
147. AIRSPACE INFORMATION ACQUISITION UNIT
151. RELATED INFORMATION ACQUISITION UNIT
153. PATH ACQUISITION UNIT
155. PATH EVALUATION UNIT
157. RESULT INFORMATION ACQUISITION UNIT
159. LEARNING INFORMATION ACQUISITION UNIT
161. OUTPUT UNIT
163. OUTPUT INFORMATION ACQUISITION UNIT
170. TRANSMISSION UNIT
700. OUTPUT TERMINAL
1158. DISTURBANCE PREDICTION UNIT (an example of PREDICTION INFORMATION ACQUISITION UNIT)
1165. DISTURBANCE PREDICTION OUTPUT UNIT (an example of PREDICTION INFORMATION OUTPUT UNIT)

## Claims

1. An information processing device comprising:
an own aircraft information acquisition unit that acquires condition information regarding the condition of the target aircraft;
a path acquisition unit that acquires a path that the target aircraft may follow;
a related information acquisition unit that acquires related information regarding the path based on the condition information; and
an output unit that outputs output information based on the related information.

2. An information processing device in accordance with claim 1, wherein the path acquisition unit acquires the path that the target aircraft may follow based on paths flown by aircraft in the past.

3. An information processing device in accordance with claim 1, wherein the related information acquisition unit acquires the related information based on information regarding airspace facility usage fees for the path.

4. An information processing device in accordance with claim 1, wherein the related information acquisition unit acquires acquired information, comprising an estimated result of the engine combustor outlet temperature of the target aircraft, by applying input information based on the path to learning information corresponding to the characteristics of the target aircraft, and acquires the related information, comprising information regarding maintenance costs of the target aircraft, using the acquired information and the engine operating time for flying the path.

5. An information processing device in accordance with claim 1, wherein the path acquisition unit acquires two or more paths that the target aircraft may follow, and
the related information acquisition unit acquires the related information, comprising information indicating the recommended path for the target aircraft based on whether each of the acquired paths satisfies specified recommendation conditions, based on specified information designating one or more of specified factors for each path and the values of the respective factors.

6. An information processing device in accordance with claim 1, further comprising a path prediction unit that acquires location prediction information showing the future positions of other aircraft different from the target aircraft in a time series by applying input information to a neural network with a recursive structure, wherein
the path prediction unit is configured to acquire the location prediction information for each of two or more of the other aircraft using a prediction model including an attention mechanism pooling layer to share the condition within the neural network used for each of the two or more other aircraft flying simultaneously, and
the related information acquisition unit is configured to acquire the related information using the location prediction information.

7. An information processing device in accordance with claim 6, wherein the related information acquisition unit is configured to acquire the related information while the target aircraft is flying, and
the output information comprises information for displaying the positions of one or more of the other aircraft after a first period and a second period and the positions of the target aircraft after the first period and the second period on a map.

8. An information processing device in accordance with claim 6, wherein the related information acquisition unit is configured to acquire information regarding changing the path of the target aircraft as the related information, based on the location prediction information, when it is determined that the future relationship between the target aircraft and the other aircraft satisfies relationship conditions based on the issuance history of control instructions in air traffic control while the target aircraft is flying.

9. An information processing device in accordance with claim 1, further comprising a congestion information acquisition unit that acquires congestion information indicating the congestion level at the destination of the target aircraft based on information regarding aircraft heading to the same destination, and
the output unit outputs the output information based on the congestion information.

10. An information processing device in accordance with claim 9, wherein the output unit outputs the output information corresponding to the timing of the target aircraft arriving at the destination based on the congestion information and the condition information.

11. An information processing device in accordance with claim 9, further comprising another aircraft information acquisition unit that acquires information regarding other aircraft different from the target aircraft, and
the congestion information acquisition unit acquires the future congestion information of the destination based on the information regarding the other aircraft currently flying.

12. An information processing device in accordance with claim 9, wherein the output unit outputs information regarding changing the flight condition of the target aircraft as the output information based on the congestion information and the condition information while the target aircraft is flying.

13. An information processing device in accordance with claim 9, wherein the output information comprises information for visually displaying the congestion level at the destination by time zone in which aircraft arrive.

14. An information processing device in accordance with claim 1, further comprising a weather information acquisition unit that acquires weather information comprising information regarding the condition of the atmosphere, wherein
the related information acquisition unit acquires the related information, comprising the prediction results of turbulence intensity in the area corresponding to the path based on the weather information, and
the output information comprises information correlating the prediction results of turbulence intensity and the path.

15. An information processing device in accordance with claim 14, wherein the output information is information for displaying an image that illustrates the prediction results of turbulence intensity overlaid on the path.

16. An information processing device in accordance with claim 1, further comprising a weather information acquisition unit that acquires weather information comprising information regarding the condition of the atmosphere, wherein the related information acquisition unit acquires learning information configured by machine learning methods using two or more pairs of learning input information, comprising weather information and condition information acquired for the flight of one aircraft, and learning output information, comprising inertia-related information measured at each point on the flight path of the aircraft, and applies input information, comprising weather information acquired by the weather information acquisition unit and condition information regarding the condition of the target aircraft, to the learning information to acquire prediction information regarding inertia at each point on the path of the target aircraft, and
acquires the related information based on the prediction information.

17. An information processing device in accordance with claim 16, wherein the path acquisition unit acquires two or more paths that the target aircraft may follow, and
the related information acquisition unit acquires the related information, comprising information indicating the recommended path for the target aircraft, based on whether each of the acquired paths satisfies the recommendation conditions based on the acquired prediction information and the determination results.

18. An information processing method realized by the own aircraft information acquisition unit, path acquisition unit, related information acquisition unit, and output unit, comprising:
an own aircraft information acquisition step in which the own aircraft information acquisition unit acquires condition information regarding the condition of the target aircraft;
a path acquisition step in which the path acquisition unit acquires a path that the target aircraft may follow;
a related information acquisition step in which the related information acquisition unit acquires related information regarding the path based on the condition information; and
an output step in which the output unit outputs output information based on the related information.

19. A program that makes a computer function as:
an own aircraft information acquisition unit that acquires condition information regarding the condition of the target aircraft;
a path acquisition unit that acquires a path that the target aircraft may follow;
a related information acquisition unit that acquires related information regarding the path based on the condition information; and
an output unit that outputs output information based on the related information.
